# FASCICULE DE BREVET EUROPEEN

(11) **EP 4 294 874 B1**
(45) Date de publication et mention de la délivrance du brevet: **03.04.2024**
(21) Numéro de dépôt: 23722864.8
(22) Date de dépôt: 26.04.2023
(51) Int. Cl.: C08K 5/18, C08L 21/00, C08K 5/00, C08L 15/00, C08L 23/08, C08L 9/02

(54) **UTILISATION D'UN ANTIOXYDANT POUR RÉDUIRE ET/OU PRÉVENIR LA TOXICITÉ D'UNE COMPOSITION DE CAOUTCHOUC**
VERWENDUNG EINES ANTIOXIDANS ZUR VERRINGERUNG UND/ODER VERHINDERUNG DER TOXIZITÄT EINER KAUTSCHUKZUSAMMENSETZUNG
USE OF AN ANTIOXIDANT FOR REDUCING AND/OR PREVENTING THE TOXICITY OF A RUBBER COMPOSITION

(30) Priorité: 27.04.2022 FR 2203941
(43) Date de publication de la demande: 27.12.2023
(73) Titulaire: NYCO, 75008 Paris (FR)
(72) Inventeur: SEVERAC, Florence, 78440 Gargenville (FR); HERVE, Grégoire, 75012 PARIS (FR)
(74) Mandataire: Jacobacci Coralis Harle
(86) Numéro de dépôt international: PCT/EP2023/061024
(87) Numéro de publication internationale: WO 2023/209042

(56) Documents cités:
- EP-A1- 2 842 995
- WO-A1-2009/071857
- CN-A- 107 540 559
- FR-A1- 2 156 392

## Description

### DOMAINE TECHNIQUE

La présente invention concerne le domaine des additifs anti-oxydants utilisés dans des compositions de caoutchouc, à savoir dans des compositions d'élastomère (substance macromoléculaire, naturelle ou synthétique, possédant l'élasticité caoutchoutique). La présente invention concerne en particulier l'utilisation d'antioxydants polymériques spécifiques dans une composition de caoutchouc afin de réduire et/ou prévenir sa toxicité.

### ARRIERE-PLAN TECHNOLOGIQUE

Les applications des compositions de caoutchouc couvrent un vaste champ d'utilisations dans la vie courante, tels que les joints, les tuyaux, dans le domaine de l'automobile (pneus, ceinture de voiture et les diverses pièces en caoutchouc : durites, etc.), du médical, de l'habillement (semelle de chaussure) et également dans des usages de hautes performances (aéronautiques et offshore).

De façon connue, les compositions de caoutchouc comprennent généralement un ou plusieurs additifs dont les anti-oxydants.

Les anti-oxydants sont quant à eux également utilisés dans un grand nombre d'applications et d'objets courants de la vie quotidienne, et, malgré leur teneur relativement modeste dans le matériau dans lequel ils sont incorporés, leur apport est capital au regard de la durée de vie et de la conservation des propriétés physico-chimiques et mécaniques de ces objets courants. Dans le cas particulier, des plastiques, ou encore plus spécifique, des caoutchoucs utilisés dans les tuyaux (pièces sous capot par exemple), câbles électriques ou encore des pneus, leur présence permet de préserver les propriétés mécaniques des matériaux en évitant notamment leur durcissement par oxydation à l'air ou à l'ozone (cas des pneus soumis à l'action de l'ozone généré par l'échauffement de l'air au contact des pots catalytiques lié au trafic routier).

A ce jour, les amines aromatiques, telles que les monomères de diphénylamines (**DPA**) ou encore de p-phénylènediamines (**PPD**) sont très largement utilisées dans les tuyaux, câbles ou pneus en caoutchouc. Cette dernière famille (**PPD**) constitue d'ailleurs aujourd'hui un éventail d'additifs de choix pour ses propriétés antioxydantes et antiozonantes nécessaires aux pneus soumis à ces deux phénomènes de vieillissement. A titre d'exemple, le composé N,N'-Bis(1,4-diméthylpentyl)-p-phénylènediamine (ci-après **77PD,** CAS 3081-14-9) est couramment utilisé pour les revêtements en caoutchouc des câbles électriques. Également, il est estimé qu'en 2009, 100 000 tonnes par an de N-(1,3-diméthylbutyl)-N'-phényl-p-phénylènediamine (ci-après **6PPD**) étaient consommées en Chine pour la fabrication de caoutchoucs toutes applications confondues.

Malheureusement, les études récentes montrent que le profil toxicologique des anti-oxydants standards, comme ceux à base d'amines ou de diamines aromatiques, évoluent négativement, et ce, de façon drastique et inquiétante au regard des dangers établis reliés à l'Homme et à son environnement (caractère cancérogène, mutagène, ou toxique pour la reproduction, dit caractère « CMR », toxicité aquatique/écotoxique, bioaccumulation, substance qualifiée de Persistante, Bioaccumulable et Toxique, dit « PBT »). Cette tendance s'accélère sous l'effet des agences de réglementation internationales poussant à caractériser de plus en plus précisément et intensément les matières chimiques produites à très large volume. A titre d'exemple, l'Agence Européenne des produits chimiques (ECHA) fait état des dangers patents des principaux antioxydants appartenant notamment à la famille des monomères de diphénylamines (DPA) ou p-phénylènediamines (PPD) utilisés massivement dans l'industrie chimique des fluides, des plastiques ou encore des caoutchoucs.

En particulier, les anti-oxydants standards ainsi que leur(s) toxicité(s) avérée(s) sont répertoriés dans le tableau 1 ci-dessous :

**[Tableau 1]**

| **Composé** | **Dénomination** | **N°CAS** | **Toxicité** |
|---|---|---|---|
| N-(1,3-diméthylbutyl)-N'-phényl-p-phénylènediamine | **6PPD** | CAS 793-24-8 | Endommage la fertilité ou présente des répercussions négatives sur l'enfant à naitre (reprotoxique), toxique pour la vie aquatique avec des effets à long terme (écotoxique), est nocif s'il est ingéré (toxicité aiguë) et peut causer une réaction allergique cutanée |
| | | | (https://echa.europa.eu/fr/substance-information/- /substanceinfo/100.011.222) |
| N'-isopropyl-N'-phényl-p-phénylènediamine | **IPPD** | CAS 101-72-4 | Est très nocif pour la vie aquatique avec des effets à long terme (écotoxique), est nocif s'il est avalé (toxicité aiguë) et peut en outre provoquer une réaction allergique cutanée |
| | | | https://echa.europa.eu/fr/substance-information/- /substanceinfo/100.002.700 |
| N-cyclohexyl-N'-phényl-p-phénylènediamine | **CPPD** | CAS 101-87-1 | Est toxique pour la vie aquatique avec des effets à long terme (écotoxique), et peut en outre provoquer une réaction allergique cutanée |
| | | | https://echa.europa.eu/fr/substance-information/- /substanceinfo/100.002.714 |
| N, N'-diphényl-p-phénylènediamine | **DPPD** | CAS 74-31-7 | Est nocive pour la vie aquatique avec des effets à long terme (écotoxique), et peut en outre provoquer une réaction allergique cutanée |
| | | | https://echa.europa.eu/fr/substance-information/-/substanceinfo/100.000.734 |
| N,N'-Bis(1,4-diméthylpentyl)-p-phénylènediamine | **77PD** | CAS 3081-14-9 | Est très toxique pour la vie aquatique avec des effets à long terme (écotoxique), est nocif s'il est avalé (toxicité aiguë) et peut en outre provoquer une réaction allergique cutanée |
| | | | https://echa.europa.eu/fr/substance-information/- /substanceinfo/100.019.433 |
| Mélange de monomères de N,N-diphénylamine | **Irganox^{®} L57** | CAS 68411-46-1 | Est nocif pour la vie aquatique avec des effets à long terme (écotoxique) |
| | | | https://echa.europa.eu/fr/substance-information/- /substanceinfo/100.063.733 |
| Bis(nonylphényl)amine | **Irganox^{®} L67** | CAS 36878-20-3 | Est nocif pour la vie aquatique avec des effets à long terme (écotoxique) |
| | | | https://echa.europa.eu/fr/substance-information/- /substanceinfo/100.048.393 |
| N-phényl-1-naphthylamine | **PAN-1** | CAS 90-30-2 | Est très toxique pour la vie aquatique avec des effets à long terme (écotoxique), est nocif s'il est avalé (toxicité aiguë), peut causer des dommages aux organes par exposition prolongée ou répétée et peut en outre provoquer une réaction allergique cutanée |
| | | | https://echa.europa.eu/fr/substance-information/- /substanceinfo/100.001.803 |
| 4,4'-méthylène-bis-(2,6-di-tertbutylphénol) | **Ethanox^{®} 4702** | CAS 118-82-1 | En cours d'évaluation en tant que perturbateur endocrinien et comme substance persistante, |
| | ou **M EDBP** | | bioaccumulable et toxique (substance PBT) |
| | | | https://echa.europa.eu/fr/substance-information/-/substanceinfo/100.003.891 |

Cette toxicité des anti-oxydants standards a notamment été confirmée par de récentes recherches scientifiques, telles que celles de Tian et al. Science, 2021, 371 (6525), 185-189 ou encore celles de W. Huang et al. Environ.Sci.Technol.Lett. 2021, 8, 381-385, qui montrent que les principaux anti-oxydants utilisés à ce jour sont toxiques pour l'homme et/ou l'environnement.

La publication de Tian et al. porte sur l'effet des anti-oxydants sur le saumon coho du Pacifique (*Oncorhynchus kisutch*) (Nord-ouest des USA). Les auteurs ont constaté que chez ce saumon, l'exposition annuelle aux eaux pluviales entraîne une mortalité aiguë inexpliquée lorsque le saumon adulte migre vers les ruisseaux urbains pour se reproduire. En étudiant ce phénomène, ils ont identifié dans les eaux un produit hautement toxique de transformation du **6PPD,** le **6PPD-quinone.** Tel que mentionné ci-dessus, le **6PPD** est un antioxydant du caoutchouc des pneus omniprésent dans le monde. Par conséquent, cette étude démontre que les produits d'oxydations dérivés du **6PPD** sont encore plus toxiques que le **6PPD** lui-même. En particulier, l'analyse rétrospective du ruissellement de la chaussée et des ruisseaux pluviaux représentatifs de la côte ouest des États-Unis a révélé la présence généralisée de **6PPD-quinone** (<0,3 à 19 microgrammes par litre) à des concentrations toxiques (concentration létale médiane de 0,8 ± 0,16 microgrammes par litre). Cette publication démontre ainsi que le composé **6PPD** et ses produits d'oxydation sont hautement écotoxiques et que les résidus de caoutchouc de pneus disséminés dans la nature sont un réel enjeu écologique.

La publication de W. Huang et al. a démontré en complément que les particules d'usure de pneus contenant ces anti-oxydants toxiques sont répandues partout dans l'environnement, à savoir sur les routes, les parkings et même à l'intérieur des voitures ou des maisons. Ces anti-oxydants sont notamment le **6PPD,** le **IPPD,** le **CPPD** ou encore le **DPPD.** Le **6PPD-quinone** a notamment été détecté à l'intérieur des véhicules automobiles.

Une publication de Zhang et al. Environ.Sci.Technol. 2021 (« p-Phenylenediamine Antioxidants in PM2.5: The Underestimated Urban Air Pollutants ») portant sur la qualité de l'air dans les grandes villes en Chine a montré des traces non négligeables d'anti-oxydants couramment utilisés dans les compositions de caoutchouc dans les particules fines de l'air atmosphérique urbain, tels que les composés **6PPD** et **77PD,** ainsi que des produits d'oxydation **IPPD-quinone** et **DPPD-quinone.**

Le document FR 2 156 392 décrit des produits anti-oxydants pour des matières, telles que le caoutchouc (page 6, ligne 1-4) comme du 2-(4,4'-di-t-octyldiphénylamino)-4,4'-di-t-octyldiphénylamine. Ce document cite seulement à titre général les caoutchoucs, au même titre que les plastiques, sans jamais étayer leur description, ainsi que l'efficacité des anti-oxydants dans de telles compositions qui se trouvent, contrairement aux compositions lubrifiantes, à l'état solide. Seules les performances dans le domaine des fluides et des lubrifiants sont démontrées.

Le document CN 107 540 559 décrit un procédé de préparation de 4,4'-bis(α,α-dimethylbenzyl)diphénylamine. Il présenterait, d'après ce document (paragraphe 0031) un effet non toxique. Cependant, aucun essai expérimental n'illustre cette propriété dans ce document. Aucune méthodologie prouvant sa non-toxicité n'a été décrite ou suggérée. Les inventeurs ont seulement cité des avantages de ce composé de manière très subjective. Même son efficacité n'a pas été démontré. Au contraire, la Demanderesse a démontré que ce composé est fortement toxique, que ce soit en termes de de reprotoxicité de mutagénicité et du caractère carcinogène (c.f. : composé 25 du tableau 5 ci-après).

Le document EP 2 842 995 porte sur un matériau spécifique pour la fabrication d'un caoutchouc de pneu spécial pour roulage à plat pour un véhicule de combat militaire à roues. A la connaissance de la Demanderesse, l'industrie du caoutchouc n'emploie que des composés monomères (substances) en tant qu'anti-oxydant et non des polymères/oligomères.

Le document WO 2009/071857 porte sur un procédé de préparation d'un agent anti-oxydant et/ou anticorrosion pour huile lubrifiante comprenant des motifs diphénylamine et phényl-α-naphthylamine.

Il existe ainsi un besoin très urgent dans l'état de la technique de développer des additifs anti-oxydants, voire antiozonants, alternatifs aux anti-oxydants standards tels que mentionnés ci-dessus afin de fabriquer des compositions de caoutchouc plus vertueuses.

En particulier, il existe un besoin dans l'état de la technique de développer des additifs anti-oxydants alternatifs pour composition de caoutchouc présentant à la fois un effet anti-oxydant satisfaisant, tout en permettant d'augmenter le niveau de sécurité (baisse de la dangerosité pour l'Homme) et de réduire l'impact environnemental de la composition de caoutchouc dans laquelle l'anti-oxydant est incorporé et ce, dans les domaines d'application visés (automobile, habillement, etc.).

### EXPOSE DE L'INVENTION

Dans ce cadre, la Demanderesse s'est attachée à développer des composés présentant à la fois des propriétés antioxydantes, tout en permettant de prévenir et/ou de réduire la toxicité d'une composition de caoutchouc dans laquelle ils sont incorporés, au regard de celle des anti-oxydants standards, tels que ceux mentionnés ci-dessus appartenant notamment à la famille des monomères de diphénylamines (DPA) ou p-phénylènediamines (PPD). Par exemple, le document CN 107 540 559 décrit que le composé 4,4'-bis(α,α-dimethylbenzyl)diphénylamine, qui est un monomère de diphénylamines (DPA) serait non toxique. Tel que mentionné ci-dessus, cet effet n'est nullement démontré par cette divulgation. Or, l'essai de toxicité QSAR réalisé par la Demanderesse prouve, au contraire, que ce composé est toxique, que ce soit en termes de reprotoxicité, mutagénicité et/ou du caractère carcinogène.

Comme cela sera illustré dans la partie expérimentale ci-dessous, la Demanderesse a notamment démontré, de façon surprenante et inattendue, qu'une fois oligomérisés et/ou polymérisés, la toxicité des monomères de diphénylamines, se réduit drastiquement. Ils permettent ainsi de former des oligomères et/ou polymères comprenant au moins un motif de répétition diphénylamine présentant à la fois des propriétés antioxydantes, voire antiozonantes, adaptées aux divers domaines d'utilisation de composition caoutchouc (pneus, câbles électriques, etc.), tout en étant faiblement voire pas du tout toxique pour l'Homme et/ou l'environnement.

En effet, les essais expérimentaux ci-dessous montrent que les anti-oxydants selon l'invention, qui ont été sélectionnés par la Demanderesse, n'ont pas été choisis de façon arbitraire et présentent un effet technique différent (à savoir ils permettent de réduire/prévenir/empêcher la toxicité d'une composition caoutchouc) par rapport à d'autres composés anti-oxydant, notamment par rapport à des monomères de diphénylamine (DPA) ou de p-phénylènediamine (PPD).

Bien que l'utilisation de composés oligomères et/ou polymères comprenant au moins un motif de répétition diphénylamine en tant qu'additifs anti-oxydant ait déjà été envisagée dans l'art antérieur afin notamment de former des antioxydants pour des compositions lubrifiantes qui sont par définition liquide, à la connaissance de la Demanderesse, aucune étude n'a permis de démontrer leur non-toxicité et par conséquent leur intérêt pour prévenir et/ou réduire, voire empêcher la toxicité et encore moins dans une composition de caoutchouc qui est solide et réticulé.

Il était en effet inattendu ou insoupçonné que des oligomères/polymères (c'est-à-dire des macromolécules) puissent avoir un effet antioxydant similaire à des monomères ou substances, lesquelles sont par définition plus mobiles et plus actives en théorie dans des compositions solides en caoutchouc. Il faut bien distinguer un matériau solide et réticulé d'un fluide à travers lequel il est plus aisé de faire agir un antioxydant soluble. A ce jour, à la connaissance de la Demanderesse, la référence technique haute performance en tant qu'anti-oxydant dans des compositions de caoutchouc (pneu) est le composé décrit dans le document CN 107 540 559, à savoir le 4,4'-bis(α,α-dimethylbenzyl)diphenylamine (CAS 10081-67-1 correspondant au produit Naugard^{®} 445). Or, tel que mentionné ci-dessus, ce composé est toxique, contrairement aux composés de l'invention. Les autres substances couramment utilisées dans ce domaine sont le 6PPD (composé comparatif 22) et l'IPPD (composé comparatif 23). Ces deux composés sont également toxiques, l'un est même un composé CMR selon le règlement européen en vigueur. Ainsi, l'effet technique particulier des composés selon l'invention ne pouvait pas être prédit des enseignements des arts antérieurs.

En outre, la Demanderesse considère que tester la toxicité des anti-oxydants n'est pas une mesure évidente de l'Homme du métier. C'est pour cela qu'elle a mis au point une méthodologie efficace et approfondie selon quatre modèles (C : carcinogène, M : mutagène, R : reprotoxique et N : neurotoxique) afin de tester de manière incontestable la toxicité d'un composé de manière globale. Cette méthodologie a notamment permis de mettre en lumière la toxicité fortement réduite des oligomères/polymères de diphénylamines selon l'invention par rapport à d'autres composés anti-oxydants usuels. A ce jour, de nombreux anti-oxydants, au fur et à mesure des exigences toujours plus poussées des règlements en vigueur (comme l'Agence Européenne des produits chimiques (ECHA), etc) voient leur classification évoluer, généralement dans le mauvais sens. Par exemple, le produit Irganox L57 (décrit dans le tableau 1 ci-dessus) vient d'être classé en plus comme composé CMR.

Pour conclure, une combinaison impliquant haute performance technique et haut pouvoir antioxydant (au niveau des hauts standards du domaine tels que le Naugard 445) associé à une toxicité globale fortement réduite ne pouvait être que très peu triviale, voire même improbable pour l'homme du métier.

### RESUME DE L'INVENTION

Ainsi, la présente invention concerne l'utilisation d'au moins un antioxydant dans une composition de caoutchouc, ledit au moins antioxydant comprenant au moins un oligomère et/ou polymère comprenant au moins un motif de répétition diphénylamine de formule générale (I) : 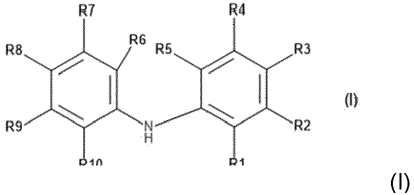 dans laquelle chacun parmi **R1** à **R10** est choisi indépendamment parmi un atome d'hydrogène, un groupe alkyle qui est un groupe hydrocarboné saturé, linéaire ou ramifié comprenant de 1 à 24 atomes de carbone et un groupe aralkyle qui est un groupe alkyle tel que décrit ci-dessus dont au moins un des atomes de carbone est substitué par un groupe aryle monocyclique ou polycyclique aromatique hydrocarboné comprenant 5 à 14 atomes de carbone, pour réduire et/ou prévenir la toxicité de ladite composition de caoutchouc dans laquelle il est incorporé au regard de celle des antioxydants appartenant à la famille des monomères de diphénylamines (DPA) ou p-phénylènediamines (PPD).

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

Dans la présente invention, sauf précision contraire, le terme « comprendre » et ses dérivés doivent être compris comme non limitatifs et n'excluant pas la présence d'autres composants ou étapes.

Sauf précision contraire, les intervalles mentionnés dans la présente invention s'entendent bornes incluses.

### DESCRIPTION DETAILLEE

La présente invention porte ainsi sur l'utilisation d'au moins un antioxydant dans une composition de caoutchouc, ledit au moins antioxydant comprenant au moins un oligomère et/ou polymère comprenant au moins un motif de répétition diphénylamine de formule générale (I) : 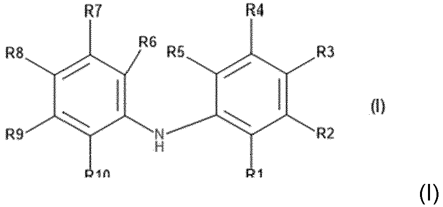 dans laquelle chacun parmi **R1** à **R10** est choisi indépendamment parmi :
un atome d'hydrogène,
un groupe alkyle qui est un groupe hydrocarboné saturé, linéaire ou ramifié comprenant de 1 à 24 atomes de carbone et
un groupe aralkyle qui est un groupe alkyle tel que décrit ci-dessus dont au moins un des atomes de carbone est substitué par un groupe aryle monocyclique ou polycyclique aromatique hydrocarboné comprenant 5 à 14 atomes de carbone,
pour réduire et/ou prévenir la toxicité de ladite composition à base de caoutchouc dans laquelle il est incorporé au regard de celle des antioxydants appartenant à la famille des monomères de diphénylamines (DPA) ou p-phénylènediamines (PPD).

Par anti-oxydant, on entend des additifs chimiques de spécialité qui servent à interrompre le processus de dégradation lié à l'oxydation dans des compositions dans lesquelles ils sont intégrés, dans le cas présent des compositions de caoutchouc.

Selon l'invention, par « toxicité » d'une substance et/ou d'une composition, on entend que ladite substance et/ou ladite composition présente au moins une, de préférence au moins deux, en particulier au moins trois et typiquement au moins quatre, comme au moins cinq, au moins six, voire toutes les toxicités suivantes :
- la reprotoxicité qui correspond à l'altération de la fertilité ou altération du mammifère/être vivant à naître,
- la mutagénicité qui est la propension d'une substance à provoquer des mutations génétiques,
- la toxicité aigüe qui est la toxicité induite, dans un court laps de temps (ex 24 h), par l'administration ou mise en contact (application topique) d'une dose unique (éventuellement massive) ou de plusieurs doses acquises dans ce laps de temps d'un produit ou mélange toxique (naturel ou chimique),
- l'écotoxicité qui est l'ensemble des déséquilibres ou des nuisances provoqués par une activité industrielle ou la mise en place d'un corps, d'un produit étranger dans un environnement naturel liée généralement à l'activité humaine;
- la neurotoxicité qui est la capacité que possède une substance ou un composé à induire des effets néfastes dans le système nerveux d'un mammifère/être vivant, tel que l'être humain ou les planaires,
- le caractère carcinogène qui est la propension d'une substance à causer/provoquer l'apparition d'un cancer ou participer à son aggravation,
- la toxicité sur la synthèse, la dégradation, le transport et le mode d'action des hormones, comme c'est le cas des perturbateurs endocriniens (toxicité indirecte via les modifications physiologiques qu'ils engendrent).

Un composé ayant un caractère CMR (caractère cancérogène, mutagène, ou toxique pour la reproduction) présente ainsi diverses toxicités.

Selon une caractéristique de l'invention, la toxicité comprend ainsi une ou plusieurs des toxicités suivantes : la neurotoxicité, la reprotoxicité, la mutagénicité, la toxicité aiguë, le caractère carcinogène, la toxicité sur la synthèse, la dégradation, le transport et le mode d'action des hormones et l'écotoxicité.

« Par réduire » la toxicité d'une composition de caoutchouc, on entend que ledit au moins antioxydant selon l'invention (à savoir comprenant au moins un oligomère et/ou polymère comprenant au moins un motif de répétition diphénylamine de formule générale (I)) est apte et/ou configuré pour diminuer la toxicité d'une composition de caoutchouc dans laquelle il est inclus, à savoir de par sa présence, notamment par rapport à d'autres éventuels composés anti-oxydants standards généralement toxiques, que ledit au moins oxydant selon l'invention comprenant au moins un oligomère et/ou polymère comprenant au moins un motif de répétition diphénylamine de formule générale (I) permet d'abaisser/diminuer la toxicité d'une composition de caoutchouc et d'obtenir une composition de caoutchouc non-toxique ou tout au moins à toxicité réduite.

« Par prévenir » la toxicité d'une composition de caoutchouc, on entend ledit au moins antioxydant selon l'invention comprenant au moins un oligomère et/ou polymère comprenant au moins un motif de répétition diphénylamine de formule générale (I) permet d'empêcher la composition de caoutchouc d'être considérée comme toxique et/ou d'empêcher l'apparition de symptômes toxiques chez un mammifère ou tout autre être vivant, tel qu'un être humain ou un animal, qui serait en contact avec ladite composition de caoutchouc. A titre d'exemple, des symptômes neurotoxiques peuvent par exemple atteindre le système nerveux central (SNC) et présenter les effets suivants : des maux de tête, une perte d'appétit, une somnolence, des troubles de l'humeur et de la personnalité, des atteintes cognitives (troubles d'apprentissage et de concentration), ou atteindre le système nerveux périphérique (SNP) et présenter les effets suivants : atteintes motrices telles que faiblesse, tremblements, incoordination, convulsions, etc. ou atteintes sensorielles, telles que diminution de l'audition, vision des couleurs, acouphènes, pertes d'équilibre, etc. ; ces effets pouvant être réversibles ou non en fonction du degré d'exposition aiguë ou chronique du mammifère. A titre d'exemple, des symptômes de toxicité aiguë peuvent être des irritations de la peau, une réaction allergique cutanée, des vomissements, etc.

En général, ledit au moins antioxydant selon l'invention (à savoir comprenant au moins un oligomère et/ou polymère comprenant au moins un motif de répétition diphénylamine de formule générale (I)) est apte à et/ou configurer pour réduire et/ou prévenir la toxicité d'une composition de caoutchouc aux différentes étapes de la vie de ladite composition de caoutchouc, à savoir sa mise en oeuvre, son usage et sa fin de vie incluant l'épandage dans l'environnement (comme les particules, ou l'usure d'un pneu fabriqué à partir de ladite composition).

Selon un mode de réalisation particulier, ledit oligomère et/ou polymère comprenant au moins un motif de répétition diphénylamine de formule générale (I) peut comprendre également au moins un motif de répétition phényl α-naphtylamine de formule générale (II) : 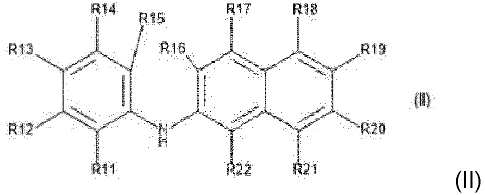 dans laquelle chacun parmi **R11** à **R22** est choisi indépendamment parmi :
un atome d'hydrogène et
un groupe alkyle qui est un groupe hydrocarboné saturé, linéaire ou ramifié comprenant de 1 à 24 atomes de carbone.

Par « polymère » d'au moins une diphénylamine et éventuellement au moins une phényl α-naphtylamine, on désigne dans la présente invention un composé comprenant la répétition d'au moins deux motifs diphénylamine avec éventuellement au moins un motif phényl α-naphtylamine.

Par « oligomère » d'au moins une diphénylamine et éventuellement au moins une phényl α-naphtylamine, on désigne dans la présente invention un polymère d'au moins une diphénylamine et éventuellement au moins une phényl α-naphtylamine qui comprend entre 2 et 15 motifs de répétition, ou un mélange de tels composés. Il peut notamment s'agir d'un dimère, d'un trimère, d'un tétramère, d'un pentamère, d'un hexamère, d'un heptamère, d'un octamère, d'un nonamère, d'un décamère et/ou d'un mélange quelconque de tels composés. De préférence, l'oligomère contient (en % relatif) au moins 70%, de préférence 80% et en particulier 90% en masse de dimère, de trimère, de tétramère, de pentamère ou d'un mélange de tels composés. En général, l'oligomère correspond à un dimère et/ou à un trimère.

Par « motif de répétition » diphénylamine ou phényl α-naphtylamine, on désigne le fait que, dans la structure finale de l'oligomère ou du polymère obtenu selon l'invention, est présent au moins un motif diphénylamine et au moins un motif phényl α-naphtylamine, ou au moins deux motifs diphénylamine avec éventuellement au moins un motif phényl α-naphtylamine.

Les motifs de répétition diphénylamine et phényl α-naphtylamine peuvent être positionnés de toute façon les uns par rapport aux autres dans la structure du polymère ou de l'oligomère selon l'invention. Ainsi, le polymère ou l'oligomère peut comprendre, au moins sur une partie de sa structure, une alternance régulière de motifs de répétition diphénylamine et phényl α-naphtylamine. Il peut comprendre, au moins sur une partie de sa structure, une répartition aléatoire des motifs de répétition diphénylamine et phényl α-naphtylamine. Il peut enfin comprendre, sur au moins une partie de sa structure, un bloc comprenant un seul type de motif de répétition diphénylamine ou phényl α-naphtylamine.

Dans un mode de réalisation, le polymère et/ou oligomère selon l'invention ne comprend dans sa structure que des motifs de répétition diphénylamine et phényl α-naphtylamine. Dans un autre mode de réalisation, le polymère et/ou oligomère selon l'invention ne comprend dans sa structure que des motifs de répétition diphénylamine.

Par « diphénylamine », on désigne un composé de formule (I) : 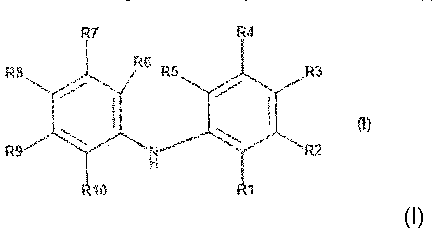 dans laquelle chacun parmi **R1** à **R10** est choisi indépendamment parmi : un atome d'hydrogène, un groupe alkyle (qui est un groupe hydrocarboné saturé, linéaire ou ramifié comprenant de 1 à 24 atomes de carbone) et un groupe aralkyle (qui est un groupe alkyle tel que décrit ci-dessus dont au moins un des atomes de carbone est substitué par un groupe aryle monocyclique ou polycyclique aromatique hydrocarboné comprenant 5 à 14 atomes de carbone).

Dans un mode de réalisation, la au moins une diphénylamine de formule (I) est une diphénylamine alkylée, c'est-à-dire que au moins un parmi **R1** à **R10** est un groupe alkyle ou aralkyle. Dans un autre mode de réalisation, au moins un parmi **R1** à **R5** est un groupe alkyle ou aralkyle, et au moins un parmi **R6** à **R10** est un groupe alkyle ou aralkyle.

En général, chacun parmi **R1** à **R10** est choisi indépendamment parmi : un atome d'hydrogène ou un groupe alkyle qui est un groupe hydrocarboné saturé, linéaire ou ramifié comprenant de 1 à 24 atomes de carbone, de préférence comprenant de 1 à 15 atomes de carbone, en particulier de 3 à 12 atomes de carbone et typiquement de 3 à 10 atomes de carbone. A titre d'exemple, lesdits au moins trois substituants peuvent être indépendamment des uns des autres un groupe tert-butyle ou un groupe tert-octyle ou encore un groupe n-nonyle.

Généralement, au moins un, en particulier au moins deux et typiquement au moins trois substituants parmi **R1** à **R10** est un groupe alkyle (tel que défini ci-après), les autres substituants étant un atome d'hydrogène. Généralement moins de neuf, en particulier moins de six et typiquement moins de quatre des substituants parmi **R1** à **R10** est un groupe alkyle, les autres substituants étant un atome d'hydrogène. Selon l'invention, « au moins un » inclut les nombres suivants et tous les intervalles entre ces valeurs : 1 ; 2 ; 3 ; 4 ; 5 ; 6 ; 7 ; 8 ; 9 ; 10. Également, dans le cadre de l'invention, « moins de neuf » inclut les nombres suivants et tous les intervalles entre ces valeurs : 9 ; 8 ; 7 ; 6 ; 5 ; 4 ;3 ; 2 ; 1. A titre d'exemple, un ou deux substituants parmi **R1** à **R10** est un groupe alkyle, les autres substituants étant un atome d'hydrogène.

Par « alkyle », on désigne dans la présente invention un groupe hydrocarboné saturé, linéaire, ramifié ou cyclique, comprenant de 1 à 24 atomes de carbone. De préférence, un groupe alkyle comprend de 1 à 12 atomes de carbone. Ainsi, selon l'invention, « un alkyle comprenant 1 à 24 atomes de carbones » inclut les nombres de carbone suivants et tous les intervalles entre ces valeurs : 1 ; 2 ; 3 ; 4 ; 5 ; 6 ; 7 ; 8 ; 9 ; 10 ; 11 ; 12 ; 13 ; 14 ; 1 5 ; 16 ; 17 ; 18 ; 19 ; 20 ; 21 ; 22 ; 23 ; 24. Parmi les groupes alkyles, on peut notamment citer le groupe méthyle, le groupe éthyle, le groupe n-propyle, le groupe iso-propyle, le groupe n-butyle, le groupe tert-butyle, le groupe iso-butyle, le groupe n-pentyle, le groupe iso-pentyle, le groupe n-hexyle, le groupe cyclohexyle, le groupe n-heptyle, le groupe n-octyle, le groupe tert-octyle, le groupe iso-octyle, le groupe n-nonyle, le groupe n-décyle, le groupe n-undécyle, le groupe n-dodécyle et le groupe iso-dodécyle. Dans un mode de réalisation particulier, un groupe alkyle est choisi dans le groupe constitué par le groupe tert-butyle et le groupe tert-octyle, ou encore le groupe n-nonyle ( nC9), et peut être choisi dans le groupe constitué par le groupe tert-butyle et le groupe tert-octyle.

Par « aralkyle », on désigne dans la présente invention un groupe alkyle dont au moins un des atomes de carbone est substitué par un groupe aryle. Parmi les exemples de groupes aralkyles, on peut citer notamment le groupe 1-méthyl 1-phényléthyle, un groupement styryle (C₆H₅-CH=CH-) ou méthylstyryle.

Par « groupe aryle », on désigne dans la présente invention un groupe monocyclique ou polycyclique aromatique hydrocarboné. Chaque cycle aromatique ou polyaromatique comprend 5 à 14 atomes. Parmi les exemples de groupes aryles, on peut citer notamment le groupe phényle.

Dans un mode de réalisation, la diphénylamine de formule (I) est choisie dans le groupe constitué par la N,N-diphénylamine, la N,N-di-(p-tert-butylphényl)amine, la N,N-di-(p-tert-octylphényl)amine, la N-(p-tert-butylphényl)-N-phénylamine, la N-(p-tert-octylphényl)-N-phénylamine, la N-(p-tert-butylphényl)-N-(p-tert-octylphényl)amine, les diphénylamines tert-butylé et/ou tert-octylé, les diphénylamine nonylées, et un quelconque mélange de celles-ci.

Dans un mode de réalisation particulier, le polymère ou l'oligomère selon la présente invention ne comprend que des motifs diphénylamine. L'oligomère comprenant au moins un motif de répétition diphénylamine de formule générale (I) selon l'invention peut ainsi être un dimère, un trimère, un tétramère, un pentamère d'une ou de plusieurs de ces diphénylamines de formule (I) décrites ci-dessus et correspondre à titre d'exemple à un dimère ou un trimère de di-(p-tert-octylphényl)amine (**DODPA**).

En particulier, lorsque l'oligomère comprenant au moins un motif de répétition diphénylamine de formule générale (I) selon l'invention est un dimère, celui-ci possède au moins trois, en général au moins quatre substituants parmi tous les substituants R1 à R10 du motif de répétition de formule (I) formant le dimère qui ne sont pas un atome d'hydrogène (les autres substituants sont ainsi des atomes d'hydrogène). Selon l'invention, « au moins trois substituants parmi R1 à R10 du motif de répétition de formule (I) formant le dimère » comprend les valeurs suivantes : 3 ; 4 ; 5 ; 6 ; 7 ; 8 ; 9 ; 10 ; 11 ; 12 ; 13 ; 14 ; 15 ; 16 ; 17 ; 18 ; 19 ; 20 et peut correspondre par exemple à trois ou à quatre substituants parmi tous les substituants R1 à R10 formant le dimère. En général, lesdits au moins trois substituants sont de préférence chacun un groupe alkyle, i.e. : groupe hydrocarboné saturé, linéaire ou ramifié comprenant de 1 à 24 atomes de carbone, de préférence comprenant de 3 à 15 atomes de carbone, en particulier de 5 à 12 atomes de carbone et typiquement de 6 à 9 atomes de carbone. A titre d'exemple, lesdits au moins trois substituants peuvent être indépendamment des uns des autres un groupe tert-butyle ou un groupe tert-octyle ou encore un groupe n-nonyle. Généralement, lesdits au moins trois substituants sont indépendamment répartis sur les deux motifs de répétition diphénylamine de formule (I) du dimère. Typiquement, chaque motif de répétition comprend au moins un desdits trois substituants. A titre d'exemple, un motif de répétition du dimère comprend au moins un substituant parmi R1 à R10 qui n'est pas un atome d'hydrogène (et est préférentiellement un groupe alkyle tel que défini ci-dessus) et l'autre motif du dimère comprend au moins deux substituants parmi R1 à R10 qui n'est pas un atome d'hydrogène (et est préférentiellement un groupe alkyle tel que défini ci-dessus).

En général, lorsque l'oligomère comprenant au moins un motif de répétition diphénylamine de formule générale (I) selon l'invention est un trimère, celui-ci possède au moins un, de préférence au moins deux substituants parmi tous les substituants R1 à R10 du motif de répétition de formule (I) formant le trimère, qui n'est pas un atome d'hydrogène (les autres substituants sont ainsi des atomes d'hydrogène). Selon l'invention, « au moins un substituant parmi tous les substituants R1 à R10 du motif de répétition de formule (I) formant le trimère » comprend les valeurs suivantes : 1, 2, 3 ; 4 ; 5 ; 6 ; 7 ; 8 ; 9 ; 10 ; 11 ; 12 ; 13 ; 14 ; 15 ; 16 ; 17, 18, 19, 20, 21, 22, 23, 24, 25, 26, 27 ; 28 ; 29 ; 30 et peut correspondre par exemple à cinq ou à six substituants parmi tous les substituants R1 à R10 formant le trimère. En particulier, ledit au moins un, de préférence cinq, voire six substituants sont généralement chacun un groupe alkyle, i.e. : groupe hydrocarboné saturé, linéaire ou ramifié comprenant de 1 à 24 atomes de carbone, de préférence comprenant de 3 à 15 atomes de carbone, en particulier de 5 à 12 atomes de carbone et typiquement de 6 à 9 atomes de carbone. A titre d'exemple, ledit ou lesdits substituants peuvent être indépendamment des uns des autres un groupe tert-butyle ou un groupe tert-octyle ou encore un groupe n-nonyle et est typiquement un groupe tert-octyle. Généralement, ledit au moins un, de préférence cinq, voire six substituants est/sont indépendamment répartis sur les trois motifs de répétition diphénylamine de formule (I) formant le trimère. Typiquement, chaque motif de répétition du trimère comprend au moins un, voire deux substituants parmi R1 à R10 qui est un groupe alkyle tel que défini ci-dessus (les autres substituants étant des atomes d'hydrogène). Généralement, ledit ou lesdits substituants alkyl sont indépendamment répartis sur les trois motifs de répétition diphénylamine de formule (I) du trimère. Typiquement, chaque motif de répétition du trimère comprend au moins un, voire deux substituant alkyl (les autres substituants étant des atomes d'hydrogène).

Les diphénylamines selon l'invention peuvent se présenter isolées, ou en mélange entre elles. Par exemple, elles peuvent se présenter sous la forme d'un mélange de N,N-diphénylamine, de N,N-di-(p-tert-butylphényl)amine, de N,N-di-(p-tert-octylphényl)amine, de N-(p-tert-butylphényl)-N-phénylamine, de N-(p-tert-octylphényl)-N-phénylamine et de N-(p-tert-butylphényl)-N-(p-tert-octylphényl)amine, les diphénylamines tert-butylé et/ou tert-octylé, les diphénylamine nonylées.

Les oligomères et/ou polymères comprenant au moins un motif de répétition diphénylamine de formule générale (I) peuvent correspondre aux composés exemplifiés ci-après.

Par phényl α-naphtylamine, on désigne selon la présente invention un composé de formule (II) : 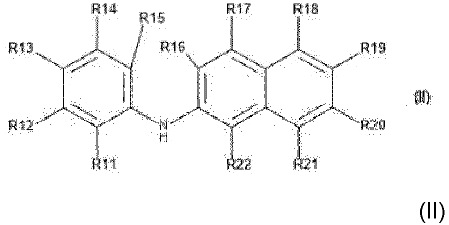 dans laquelle chacun parmi **R11** à **R22** est choisi indépendamment parmi :
un atome d'hydrogène et
un groupe alkyle qui est un groupe hydrocarboné saturé, linéaire ou ramifié comprenant de 1 à 24 atomes de carbone.

Dans un mode de réalisation, au moins un parmi **R11** à **R22** est un groupe alkyle. Dans un mode de réalisation, un seul parmi **R11** à **R22** est un groupe alkyle, en particulier un groupe tert-octyle.

Dans un mode de réalisation particulier, la phényl α-naphtylamine est la N-(4-tert-octylphényl)-1-naphthylamine, de numéro CAS 4572-51-4 (**OPAN**).

Dans un mode de réalisation de l'invention, la au moins une diphénylamine se présente sous la forme d'un mélange de N,N-diphénylamine, de N,N-di-(p-tert-butylphényl)amine, de N,N-di-(p-tert-octylphényl)amine, de N-(p-tert-butylphényl)-N-phénylamine, de N-(p-tert-octylphényl)-N-phénylamine et de N-(p-tert-butylphényl)-N-(p-tert-octylphényl)amine, et la au moins une phényl α-naphtylamine est la N-(4-tert-octylphényl)-1-naphthylamine (**OPAN**).

Dans un autre mode de réalisation de l'invention, la au moins une diphénylamine est la di-(p-tert-octylphényl)amine (**DODPA**) et la au moins une phényl α-naphtylamine est la N-(4-tert-octylphenyl)-1-naphthylamine (**OPAN**). L'oligomère formant l'anti-oxydant selon l'invention peut ainsi correspondre à un trimère **2DODPA/1OPAN, 1DODPA/2OPAN, 3DODPA.** Selon un mode de réalisation, ledit au moins oligomère peut correspondre à un mélange de trimères, comme un mélange de **2DODPA/1OPAN, 1DODPA/2OPAN** et **3DODPA.** En particulier, au sein de ce mélange, l'oligomère **2DODPA/1OPAN** est majoritaire. En général, ledit au moins oligomère comprend un mélange de trimères (comme **2DODPA/1OPAN, 1DODPA/2OPAN, 3DODPA**), de tétramères, de pentamères et d'hexamères.

Les proportions relatives en masse des deux types de motifs diphénylamine et phényl α-naphtylamine au sein du polymère ou de l'oligomère peuvent varier dans une large mesure de 0/100 à 100/0. De préférence, la proportion relative en masse diphénylamine/phényl α-naphtylamine est comprise entre 100/0 et 10/90, notamment comprise entre 100/0 et 30/70 (comme 50/50 ou 80/20), en particulier comprise entre 100/0 et 90/10 et typiquement comprise entre 100/0 et 95/5.

Le polymère ou l'oligomère selon la présente invention formant ledit au moins anti-oxydant selon l'invention peut notamment être préparé selon le procédé décrit dans la demande de brevet FR 2010199 déposée par la société Demanderesse, à savoir dans un réacteur en continu. L'homme du métier est à même d'ajuster les quantités de diphénylamine et de phényl α-naphtylamine à introduire dans le réacteur en fonction notamment de la structure souhaitée de l'oligomère ou du polymère à synthétiser et des caractéristiques thermiques recherchées. Le polymère ou l'oligomère selon la présente invention formant ledit au moins anti-oxydant selon l'invention peut notamment peut également être préparé selon le procédé décrit dans le document US 2019/0127526 ou encore le document WO 2008/022028.

Pour la présente invention, la Demanderesse a démontré la non-toxicité dudit au moins anti-oxydant comprenant au moins un oligomère et/ou un polymère comprenant au moins un motif de répétition diphénylamine de formule (I) et éventuellement au moins un motif de répétition phényl α-naphtylamine de formule (II) selon l'invention par des essais de modélisation par QSAR pour la neurotoxicité, pour la reprotoxicité, pour la mutagénicité et le caractère carcinogène.

En particulier, l'oligomère et/ou le polymère comprenant au moins un motif de répétition diphénylamine de formule (I) et éventuellement au moins un motif de répétition phényl α-naphtylamine de formule (II) présente une valeur QSAR pour la mesure de chacune des toxicités suivantes : la neurotoxicité (QSAR neurotoxique), la reprotoxicité (QSAR reprotoxique), la mutagénicité (QSAR mutagène) et le caractère carcinogène (QSAR carcinogène), correspondant à une valeur seuil statistique (%) soustrait d'un delta d'au moins 30%, ladite valeur seuil statistique étant déterminée, pour chacune desdites toxicité, par la modélisation QSAR (relation structure-activité quantitative) (de l'anglais « Quantitative Structure Activity Relationship ») selon la méthode décrite ci-après dans la partie expérimentale,

Selon l'invention, « un delta d'au moins 30% » pour la modélisation QSAR inclut les valeurs suivantes et tous les intervalles entre ces valeurs : 30 ; 31 ; 32 ; 33 ; 34 ; 35 ; 36 ; 37 ; 38 ; 39 ; 40 ; 41 ; 42 ; 43 ; 44 ; 45 ; 46 ; 47 ; 48 ; 49 ; 50 ; 51 ; 52 ; 55 ; 60 ; 65 ; 70 ; 75 ; 80 ; 85 ; 90 ; 91 ; 92 ; 93 ; 94 ; 95 ; 96 ; 97 ; 98 ; 99 ; 100 (cette gamme d'au moins 30% est à adapter pour chacune des toxicités).

Selon un mode de réalisation, la valeur seuil statistique du QSAR neurotoxique en pourcentage est typiquement de 55%.

De préférence, le delta pour la mesure du QSAR neurotoxique est d'au moins 45%, avantageusement d'au moins 55% et typiquement d'au moins 53%.

En général l'oligomère et/ou le polymère comprenant au moins un motif de répétition diphénylamine de formule (I) et éventuellement au moins un motif de répétition phényl α-naphtylamine de formule (II) présente une valeur en pourcentage (%) par modélisation QSAR inférieure ou égale à 10%, de préférence inférieure ou égale à 5% et typiquement inférieure ou égale à 2% pour la mesure de la neurotoxicité (QSAR neurotoxique).

Selon l'invention, une valeur inférieure ou égale à 10% pour la modélisation QSAR neurotoxique inclut les valeurs suivantes et tous les intervalles entre ces valeurs : 10 ; 9 ; 8 ; 7 ; 6 ; 5 ; 4 ; 3 ; 2 ; 1 ; 0,9 ; 0,8 ; 0,70 ; 0,69 ; 0,68 ; 0,67 ; 0,66 ; 0,65 ; 0,64 ; 0,63 ; 0,62 ; 0,61 ; 0,60 ; 0,59 ; 0,58 ; 0,57 ; 0,56 ; 0,55 ; 0,54 ; 0,53 ; 0,52 ; 0,51 ; 0,50 ; 0,49 ; 0,48 ; 0,47 ; 0,46 ; 0,45 ; 0,44 ; 0,42 ; 0,40 ; 0,38 ; 0,36 ; 0,34 ; 0,32 ; 0,30 ; 0,28 ; 0,26 ; 0,24 ; 0,22 ; 0,20 ; 0,18 ; 0,16 ; 0,14 ; 0,12 ; 0,10 ; 0,09 ; 0,08 ; 0,07 ; 0,06 ; 0,005 ; 0,04 ; 0,03 ; 0,02 ;0,01 ; 0,00.

Selon un autre mode de réalisation, la valeur seuil statistique QSAR reprotoxique en pourcentage est typiquement de 90%.

De préférence, le delta pour la mesure du QSAR reprotoxique est d'au moins 41%, avantageusement d'au moins 43% et typiquement d'au moins 46%.

En général, l'oligomère et/ou le polymère comprenant au moins un motif de répétition diphénylamine de formule (I) et éventuellement au moins un motif de répétition phényl α-naphtylamine de formule (II) présente une valeur en pourcentage (%) par modélisation QSAR inférieure ou égale à 65%, de préférence inférieure ou égale à 50% et typiquement inférieure ou égale à 45% pour la mesure de la reprotoxicité (QSAR reprotoxique).

Selon l'invention, une valeur inférieure ou égale à 65% pour la modélisation QSAR reprotoxique inclut les valeurs suivantes et tous les intervalles entre ces valeurs : 65 ; 64 ; 63 ; 62 ; 61 ; 60 ; 59 ; 58 ; 57 ; 56 ; 55 ; 54 ; 53 ; 52 ; 51 ; 50 ; 49 ; 48 ; 47 ; 46 ; 45 ; 44 ; 43 ; 42 ; 41 ; 40 ; 39 ; 38 ; 37 ; 36 ; 35 ; 34 ; 33 ; 32 ; 31 ; 30 ; 29 ; 28 ; 27 ; 26 ; 25 ; 24 ; 23 ; 22 ; 21 ; 20 ; 15 ; 10 ; 5 ; 3 ; 1 ; 0,50 ; ; 0,49 ; 0,48 ; 0,47 ; 0,46 ; 0,45 ; 0,44 ; 0,42 ; 0,40 ; 0,38 ; 0,36 ; 0,34 ; 0,32 ; 0,30 ; 0,28 ; 0,26 ; 0,24 ; 0,22 ; 0,20 ; 0,18 ; 0,16 ; 0,14 ; 0,12 ; 0,10 ; 0,09 ; 0,08 ; 0,07 ; 0,06 ; 0,005 ; 0,04 ; 0,03 ; 0,02 ;0,01 ; 0,00.

Selon un autre mode de réalisation, la valeur seuil statistique (QSAR mutagène en pourcentage est typiquement de 58%.

De préférence, le delta pour la mesure du QSAR mutagène est d'au moins 48%, avantageusement d'au moins 53% et typiquement d'au moins 56%.

Généralement, l'oligomère et/ou le polymère comprenant au moins un motif de répétition diphénylamine de formule (I) et éventuellement au moins un motif de répétition phényl α-naphtylamine de formule (II) présente une valeur en pourcentage (%) par modélisation QSAR inférieure ou égale à 10%, de préférence inférieure ou égale à 5% et typiquement inférieure ou égale à 2% pour la mesure de la mutagénicité (QSAR mutagène).

Selon l'invention, une valeur inférieure ou égale à 10% pour la modélisation QSAR mutagène inclut les valeurs suivantes et tous les intervalles entre ces valeurs : 10 ; 9 ; 8 ; 7 ; 6 ; 5 ; 4 ; 3 ; 2 ; 1 ; 0,9 ; 0,8 ; 0,70 ; 0,69 ; 0,68 ; 0,67 ; 0,66 ; 0,65 ; 0,64 ; 0,63 ; 0,62 ; 0,61 ; 0,60 ; 0,59 ; 0,58 ; 0,57 ; 0,56 ; 0,55 ; 0,54 ; 0,53 ; 0,52 ; 0,51 ; 0,50 ; 0,49 ; 0,48 ; 0,47 ; 0,46 ; 0,45 ; 0,44 ; 0,42 ; 0,40 ; 0,38 ; 0,36 ; 0,34 ; 0,32 ; 0,30 ; 0,28 ; 0,26 ; 0,24 ; 0,22 ; 0,20 ; 0,18 ; 0,16 ; 0,14 ; 0,12 ; 0,10 ; 0,09 ; 0,08 ; 0,07 ; 0,06 ; 0,005 ; 0,04 ; 0,03 ; 0,02 ;0,01 ; 0,00.

Selon un autre mode de réalisation, la valeur seuil statistique QSAR carcinogène en pourcentage est typiquement de 85%.

De préférence, le delta pour la mesure du QSAR carcinogène est d'au moins 77%, avantageusement d'au moins 82% et typiquement d'au moins 85%.

En général, l'oligomère et/ou le polymère comprenant au moins un motif de répétition diphénylamine de formule (I) et éventuellement au moins un motif de répétition phényl α-naphtylamine de formule (II) présente une valeur en pourcentage (%) par modélisation QSAR inférieure ou égale à 10%, de préférence inférieure ou égale à 5% et typiquement inférieure ou égale à 2% pour la mesure du caractère carcinogène (QSAR carcinogène).

Selon l'invention, une valeur inférieure ou égale à 10% pour la modélisation QSAR carcinogène inclut les valeurs suivantes et tous les intervalles entre ces valeurs : 10 ; 9 ; 8 ; 7 ; 6 ; 5 ; 4 ; 3 ; 2 ; 1 ; 0,9 ; 0,8 ; 0,70 ; 0,69 ; 0,68 ; 0,67 ; 0,66 ; 0,65 ; 0,64 ; 0,63 ; 0,62 ; 0,61 ; 0,60 ; 0,59 ; 0,58 ; 0,57 ; 0,56 ; 0,55 ; 0,54 ; 0,53 ; 0,52 ; 0,51 ; 0,50 ; 0,49 ; 0,48 ; 0,47 ; 0,46 ; 0,45 ; 0,44 ; 0,42 ; 0,40 ; 0,38 ; 0,36 ; 0,34 ; 0,32 ; 0,30 ; 0,28 ; 0,26 ; 0,24 ; 0,22 ; 0,20 ; 0,18 ; 0,16 ; 0,14 ; 0,12 ; 0,10 ; 0,09 ; 0,08 ; 0,07 ; 0,06 ; 0,005 ; 0,04 ; 0,03 ; 0,02 ;0,01 ; 0,00.

Par « composition caoutchouc », on désigne de façon générale une composition élastomère comprenant par définition des substances macromoléculaires, naturelles ou synthétiques, possédant l'élasticité caoutchoutique. En particulier, par élastomère, on entend un polymère présentant des propriétés élastiques, obtenues après réticulation.

« Par caoutchouc/élastomère », on désigne une substance élastique, imperméable et résistante obtenue par coagulation du latex de certaines plantes, arbres ou lianes de la forêt équatoriale, ou préparée synthétiquement, par polymérisation d'hydrocarbures insaturées divers.

La classification courante consiste à séparer les caoutchoucs en trois grandes catégories (les sigles utilisés sont ceux qui sont recommandés par la norme ISO 1629 de 1995) :
- les caoutchoucs à usages généraux, qui sont représentés par le caoutchouc naturel (NR) et le polyisoprène de synthèse (IR), les copolymères de butadiène styrène (SBR) et les polybutadiènes (BR) ;
- les caoutchoucs spéciaux, qui sont les co- ou terpolymères d'éthylène propylène et diène (EPM et EPDM), les copolymères d'isobutylène isoprène, chlorés ou bromés (IIR, BIIR, CIIR), les copolymères de butadiène acrylonitrile (NBR), et les polychloroprènes (CR) ;
- les caoutchoucs très spéciaux, qui rassemblent les caoutchoucs de silicone (VMQ, FVMQ), les élastomères fluorés (FKM), les polyéthylènes chlorés et chlorosulfonés (CM, CSM), les polyacrylates (ACM), les copolymères éthylène acétate de vinyle (EVM) et l'éthylène acrylate de méthyle (AEM), les caoutchoucs nitrile hydrogénés (HNBR) et les caoutchoucs d'épichlorhydrines (CO, ECO, GECO), les polyuréthanes malaxables (AU, EU).
On peut ajouter à cette classification les élastomères thermoplastiques qui forment une catégorie à part. En effet, par rapport aux caoutchoucs précédemment cités, ces élastomères n'ont pas besoin d'être vulcanisés et se mettent en oeuvre comme les thermoplastiques.

De façon connue, le caoutchouc naturel (NR) provient de la coagulation du latex de plusieurs plantes, principalement de l'hévéa, *Hevea brasiliensis,* famille des Euphorbiacées, originaire d'Amazonie. La collecte se fait par incision de l'écorce des troncs de manière que le latex, issu des canaux laticifères, s'écoule dans des godets placés juste au-dessous. Le latex récolté est transféré dans des conteneurs, filtré et peut alors être stabilisé à l'ammoniaque (précipitation des flocons) puis pressé pour diminuer sa teneur en eau ou alors coagulé de façon plus ou moins contrôlée et séché par la fumée d'un feu (les goudrons empêchent la putréfaction) afin d'obtenir des balles de caoutchouc.

A titre d'exemple, le caoutchouc synthétique peut être fabriqué à partir de la polymérisation de divers monomères, y compris l'isoprène (2-méthyl-1,3-butadiène), le 1,3-butadiène, le chloroprène (2-chloro-1,3-butadiène), et l'isobutylène (méthylpropène) avec un faible pourcentage d'isoprène pour la réticulation. Ces monomères et d'autres peuvent être mélangés dans diverses proportions souhaitables pour être copolymérisés pour une large gamme de propriétés physiques, mécaniques et chimiques. Les monomères peuvent être produits purs, et l'addition d'impuretés ou d'additifs peut être contrôlée par conception pour fournir des propriétés optimales. La polymérisation de monomères purs peut être mieux contrôlée pour donner un rapport désiré de doubles liaisons cis et trans. D'autres compositions de caoutchoucs sont bien connues comme le butadiène-acrylonitrile, aussi appelés « caoutchoucs nitrile » (NBR, en anglais : nitrile butadiene rubber) ou encore l'AEM pour ethylene acrylic rubber en anglais.

Dans la présente invention, une composition de caoutchouc ou une composition élastomère (synonyme), on entend une composition comprenant majoritairement du caoutchouc, à savoir une composition comprenant, en masse, au moins 60%, de préférence au moins 70%, en particulier au moins 80% et typiquement au moins 90% de caoutchouc.

Généralement, ladite composition de caoutchouc et/ou ledit au moins additif anti-oxydant ne comprend substantiellement pas, de préférence ne comprend pas, de monomères diphénylamines (**DPA**) ou encore de p-phénylènediamines (**PPD**) ou tout autre anti-oxydant standard (toxique et/ou écotoxique) mentionné plus haut dans la description de l'art antérieur, quel qu'il soit. Dans certains modes de réalisation, la composition de caoutchouc utilisée selon l'invention ou l'agent anti-oxydant utilisé selon l'invention ne comprend substantiellement pas, de préférence ne comprend pas, d'additif anti-oxydant autre que l'oligomère et/ou le polymère comprenant au moins un motif de répétition diphénylamine de formule (I) et éventuellement au moins un motif de répétition phényl α-naphtylamine de formule (II) selon l'invention.

En général, l'additif anti-oxydant selon l'invention représente, en masse, par rapport à la masse totale des agents anti-oxydants présents dans la composition à base de caoutchouc, de 50% à 100%, de préférence de 80% à 100%, et en particulier de 90% à 100% et typiquement 100%. Selon l'invention, par « 50% à 100% », on entend les valeurs suivantes ou tout intervalle compris entre ces valeurs : 50 ; 55 ; 60 ; 65 ; 70 ; 75 ; 80 ; 85 ; 90 ; 95 ; 100.

Ledit au moins agent anti-oxydant et généralement ledit au moins oligomère et/ou polymère comprenant au moins un motif de répétition diphénylamine de formule (I) et éventuellement au moins un motif de répétition phényl α-naphtylamine de formule (II) est présent dans la composition à base de caoutchouc utilisée dans la présente invention en une quantité telle que celles classiquement utilisées dans l'art. Par exemple, ils peuvent être utilisés en une quantité de 0,1 à 10% en poids, de préférence 0,5 à 5% en poids, typiquement de 1 à 4% par rapport au poids total de ladite composition de caoutchouc.

La composition de caoutchouc peut également comprendre d'autres additifs, tels que des charges solides minérales pour le renforcement des propriétés mécaniques, du noir de carbone, des plastifiants, des agents de vulcanisation (comme le soufre élémentaire ou polythiols), des accélérateurs de vulcanisation, des retardateurs de réticulation, des silanes et autres agents capables d'augmenter le degré de réticulation, etc. Ces autres additifs ne seront pas décrits plus en détail ci-après car leur composition et conditions d'utilisation (teneur massique, etc.) sont connues de l'homme du métier en fonction des utilisations visées de la composition à base de caoutchouc.

La présente invention peut également être appliquée à un procédé pour conserver les propriétés physico-chimiques et mécaniques d'une composition à base de caoutchouc comprenant :
- préparer ladite composition de caoutchouc, qui de préférence ne comprend pas de monomères diphénylamines (**DPA**) ou encore de p-phénylènediamines (**PPD**),
- incorporer à ladite composition à base de caoutchouc une quantité efficace d'au moins un anti-oxydant comprenant un oligomère et/ou polymère comprenant au moins un motif de répétition diphénylamine de formule (I) tel que défini ci-dessus et éventuellement au moins un motif de répétition phényl α-naphtylamine de formule (II) tel que défini ci-dessus,
ledit au moins anti-oxydant étant apte à réduire et/ou prévenir la toxicité de ladite composition à base de caoutchouc.

Bien entendu, les différents modes de réalisation décrits ci-avant pour l'utilisation dudit au moins anti-oxydant pour prévenir et/ou réduire la toxicité d'une composition à base de caoutchouc s'appliquent également pour ce procédé et ne seront pas reprises ci-après.

Selon l'invention, sauf précision contraire, les pourcentages indiqués dans la présente demande sont des pourcentages en masse.

Dans la présente invention, le terme « environ » une valeur V désigne un intervalle compris entre 0,9xV et 1,1xV. Dans certains modes de réalisation, il désigne un intervalle compris entre 0,95xV et 1 ,05xV, en particulier un intervalle compris entre 0,99xV et 1,01xV.

### EXEMPLES

### Exemple 1 : Etude de toxicité

Les oligomères et/ou polymères comprenant au moins un motif de répétition diphénylamine de formule (I) et éventuellement au moins un motif de répétition phényl α-naphtylamine de formule (II) selon l'invention ont été étudiés et comparés à d'autres composés anti-oxydants standards, en termes de modélisation QSAR pour la neurotoxicité, la reprotoxicité, la mutagénicité et le caractère carcinogène.

### Protocole de la modélisation QSAR

Les degrés de toxicité de différents composés utilisés selon l'invention et d'autres anti-oxydants standards ont été évalués par modélisation QSAR (relation structure-activité quantitative).

### Sélection des jeux d'entraînement et de validation

Un ensemble de molécules tests a été défini avec des structures chimiques compilées à partir de plusieurs sources publiquement disponibles comme : HSBD (Hazardous Substances Data Bank), EPA (U.S. Environmental Protection Agency), l'ECHA (European Chemicals Agency) et NTP (National Toxicology Program). Environ 34 000 molécules ont été sélectionnées pour ce projet dont : **3245** composés classifiés comme composés neurotoxiques, **12609** composés classifiés comme composés reprotoxiques, **4084** composés classifiés comme composés mutagènes, **12158** composés classifiés comme composés carcinogènes et **1953** composés, appelés non toxiques, classifiés comme ni neurotoxiques, ni reprotoxiques, ni mutagènes, ni carcinogènes.

A partir de cet ensemble de molécules tests, deux jeux de molécules ont été défini : un jeu d'entrainement et un jeu de validation. Pour ce faire, la méthode du « leave one out » a été utilisée. L'ensemble de molécules tests a été divisé en deux jeux, l'un contenant 90% des molécules tests et formant le jeu d'entrainement ; et l'autre, contenant les 10% des molécules tests restantes, et formant le jeu de validation.

### Performance du modèle QSAR

Une méthode de modèle linéaire généralisé (GLM) a été choisie pour réaliser une approche de relation structure/activité quantitative (QSAR). A partir du jeu d'entrainement, les modèles GLM ont été entraînés séparément pour discriminer les structures chimiques (i) entre composés neurotoxiques et non-neurotoxiques, (ii) entre composés reprotoxiques et non-reprotoxiques, (iii) entre composés mutagènes et non-mutagènes et (iv) entre composés carcinogènes et non-carcinogènes. Cette approche a résulté en quatre modèles GLM avec respectivement 328, 313, 327 et 330 descripteurs significatifs au sein des jeux d'entraînement neurotoxiques, reprotoxiques, mutagènes et carcinogènes. Pendant l'entraînement, la performance des modèles QSAR a été mesurée par des courbes ROC (Receiver Operator Characteristic) et a donné naissance à des valeurs d'aire sous la courbe (AUC) de 0.8831 pour la prédiction de la neurotoxicité, de 0.7967 pour la prédiction de la reprotoxicité, de 0.8444 pour la prédiction de la mutagénicité et de 0.8333 pour la prédiction du caractère carcinogène.

Pour valider la robustesse des modèles QSAR, ils ont été ensuite utilisés pour prédire (i) les catégories de neurotoxicité des composés du jeu de validation (c'est-à-dire la catégorisation neurotoxiques/non neurotoxiques), (ii) les catégories de reprotoxicité des composés du jeu de validation (c'est-à-dire la catégorisation reprotoxiques/non reprotoxiques), (iii) les catégories de mutagénicité des composés du jeu de validation (c'est-à-dire la catégorisation mutagènes et non-mutagènes) et (iv) les catégories du caractère carcinogène des composés du jeu de validation (c'est-à-dire la catégorisation carcinogènes et non-carcinogènes). Pendant la validation, la performance des modèles QSAR a été mesurée par des valeurs d'aire sous la courbe (AUC) et a fourni des valeurs significatives de 0,76 et plus pour la prédiction de la neurotoxicité, de la mutagénicité et du caractère carcinogène et a fourni des valeurs significatives de 0.70 et plus pour la prédiction de la reprotoxicité.

Les modèles QSAR basés GLM ont été ensuite utilisés pour étudier les composés selon l'invention.

### Interprétation des résultats

Une fois le modèle construit sur le jeu d'entraînement, puis validé avec le jeu de validation, celui-ci détermine mathématiquement sur une base statistique une valeur seuil statistique en pourcentage.

Les valeurs seuil statistiques QSAR pour les différentes toxicités testées sont illustrées dans le tableau 2 ci-dessous :

**[Tableau 2]**

| | **Molécules non toxiques et moyennement toxiques** (%) | **Molécules toxiques** (%) |
|---|---|---|
| QSAR Neurotoxique | < 55% | ≥ 55 % |
| QSAR Reprotoxique | < 90% | ≥ 90 % |
| QSAR Mutagène | < 58 % | ≥ 58 % |
| QSAR Carcinogène | < 85 % | ≥ 85 % |

Ce seuil statistique est une première ébauche permettant de distinguer les molécules non toxiques, moyennement toxiques et les molécules toxiques. Toutefois, il ne permet pas d'exclure totalement les molécules toxiques des molécules non toxiques, à savoir la marge d'erreur sur la probabilité du risque de toxicité). La Demanderesse a ainsi affiné ses recherches et déterminer qu'une réduction du seuil statistique d'un delta de 30% pour chaque modèle (QSAR neurotoxique, QSAR reprotoxique, etc.) permettait de garantir de manière fiable la toxicité ou non des molécules testées. En effet, ce nouveau seuil (seuil statistique -30%), permet d'écarter de manière indiscutable les molécules moyennement toxiques et toxiques résiduelles des molécules non toxiques. Également, une frange intermédiaire (probabilité de toxicité non nulle) incluant des molécules résiduelles moyennement toxiques et/ou toxiques a été établi afin d'établir un classement plus précis.

Le classement affiné par la Demanderesse est illustré dans le tableau 3 ci-dessous.

**[Tableau 3]**

| | **Faiblement toxique** (%) | **Moyennement toxique** (frange intermédiaire) (%) | **Fortement Toxique** (%) |
|---|---|---|---|
| QSAR Neurotoxique | < 25 | 25≤ QSAR < 55 | 55 ≤ QSAR ≤ 100 |
| QSAR Reprotoxique | < 60 | 60 ≤ QSAR < 90 | 90 ≤ QSAR ≤ 100 |
| QSAR Mutagène | < 28 | 28 ≤ QSAR < 58 | 58 ≤ QSAR ≤ 100 |
| QSAR Carcinogène | < 55 | 55 ≤ QSAR < 85 | 85 ≤ QSAR ≤ 100 |

Les composés testés sont numérotés comme suit (tableau 4 ci-dessous) :

**[Tableau 4]**

| **Ex** | **Nom chimique** | **N° CAS** | **Formule développée** |
|---|---|---|---|
| **A** | Dimère de p,p'-dioctyldiphenylamine ou dimère de DODPA | 35972-72-6 | 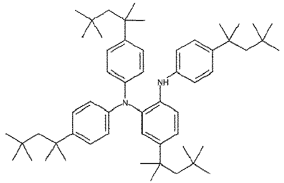 |
| **B** | Trimère : 2DODPA / 1 OPAN | - | 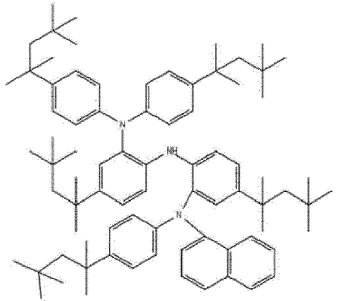 |
| **C** | Mélange oligomérique aminique à base de DODPA et OPAN (i.e. : dont 0-5% de monomère, 25-30% de dimère A, 20-25% de trimère B, 15-20% de tétramère) obtenu selon la méthode décrite dans les demandes de brevets FR 2 924 122 et WO 2009/071857 | - | - |
| **D** | Dimère de 4-*N*onyl-n-(4-nonylphenyl)aniline ou [di(nC9)DPA]₂ | | 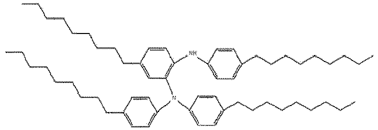 |
| **E** | (H,isoC8 DPA)(isoC4,isoC8 DPA) | | 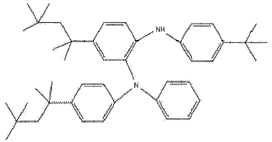 |
| **F** | (isoC4,isoC8 DPA)₂ | | 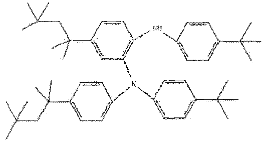 |
| **G** | (DODPA)(OPAN) | | 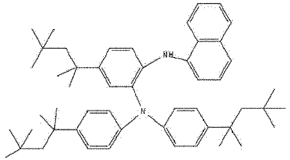 |
| **H** | (H,isoC8 DPA)(isoC4,isoC8 DPA)(di-isoC8 DPA) | | 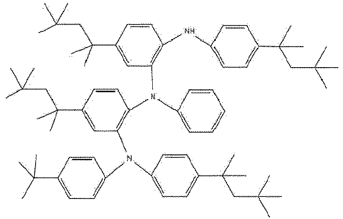 |
| **I** | (DODPA)₃ | | 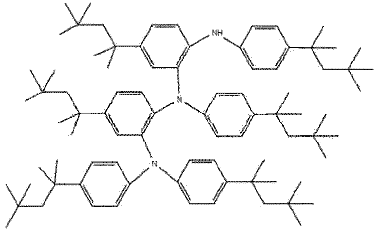 |
| **1** | p,p'-dioctyldiphenylamine (**DODPA**) | 15721-78-5 | 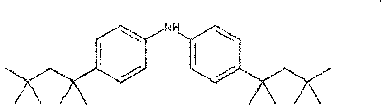 |
| **2** | N-(4-tert-octylphenyl)-1-naphthylamine | 4572-51-4 | 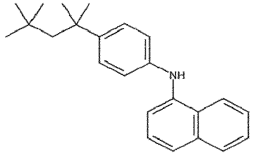 |
| | (**OPAN**) | | |
| **3** | 4,4'-Methylène-bis-(2,6-di-tert-butylphenol) (**MEDBP**) | 118-82-1 | 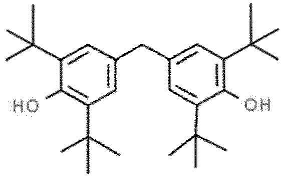 |
| **4** | Octadécyl 3-(3,5-di-tert-butyl-4-hydroxyphenyl)propanoate **Irganox^{®} L107** | 2082-79-3 | 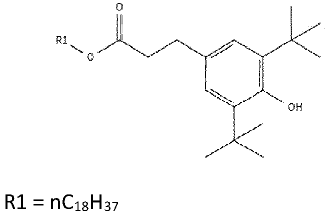 |
| **5** | Octyl 3-[4-hydroxy-3,5-bis(2-methyl-2-propanyl)phenyl]propanoate | 125643 -61-0 | 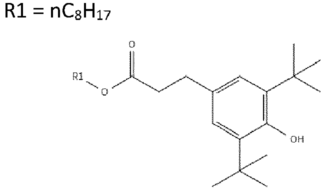 |
| **6** | 2-éthylhexyl 3-[4-hydroxy-3,5-bis(2-méthyl-2-propanyl)phényl]propanoate **Irganox^{®} L145** | 144429 -84-5 | 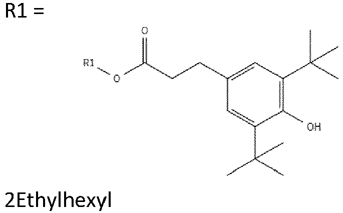 |
| **7** | 1,6-Hexanediyl bis{3-[4-hydroxy-3,5-bis(2-méthyl-2-propanyl)phenyl]propanoate} **Irganox^{®} L109** | 35074-77-2 | 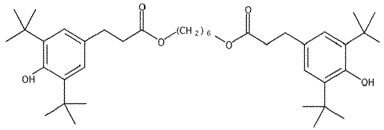 |
| **8** | 2-[(2-{[3-(3,5-di-tert-butyl-4-hydroxyphényl)propanoyl]oxy}éthyl) sulfanyl]éthyl 3-(3,5-di-tert-butyl-4-hydroxyphényl)propanoate **Irganox^{®} L115** | 41484-35-9 | 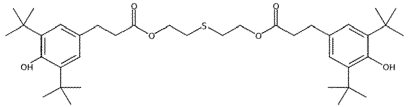 |
| **9** | 4-terbutyldiphénylamine en tant que composant de **Irganox^{®} L57** (68411-46-1) | 4496-49-5 | 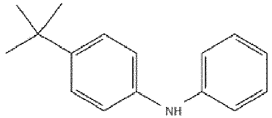 |
| **10** | Biphényl-4-ylamine | 92-67-1 | 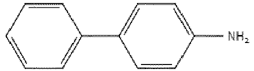 |
| **11** | Nonylphénol | 25154-52-3 | 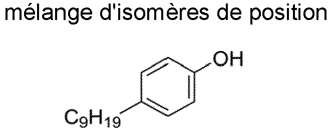 |
| **12** | 4-méthylbenzène-1,3-diamine | 95-80-7 | 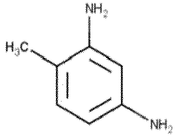 |
| **13** | 2-(2H-benzotriazol-2-yl)-4,6-ditertpentylphénol | 25973-55-1 | 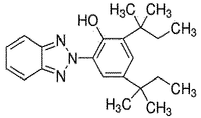 |
| **14** | 4-tert-butylphénol | 98-54-4 | 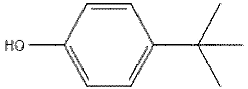 |
| **15** | 3,3-bis(4-hydroxyphenyl)-1,3-dihydro-2-benzofuran-1-one | 77-09-8 | 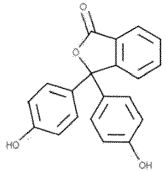 |
| **16** | 2,4-dinitrotoluène | 121-14-2 | 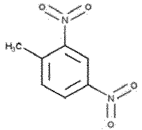 |
| **17** | 4-[(4-aminophényl)méthyl]aniline (**MDA**) | 101-77-9 | 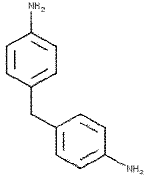 |
| **18** | N-phénylaniline ("Diphénylamine" **DPA**) | 122-39-4 | 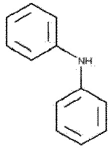 |
| **19** | N-phénylnaphthalène-1-amine **(PAN (alpha))** | 90-30-2 | 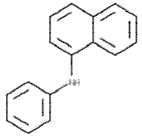 |
| **20** | N-phénylnaphthalène-2-amine **(PAN (beta))** | 135-88-6 | 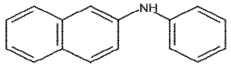 |
| **21** | 2-tert-butyl-6-[(3-tert-butyl-2-hydroxy-5-méthylphényl)méthyl]-4-méthylphénol | 119-47-1 | 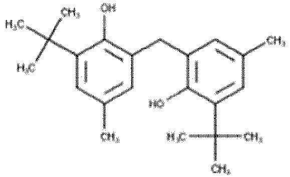 |
| **22** | N-(1,3-Diméthylbutyl)-N'-phényl-p-phénylènediamine **(6PPD)** | 793-24-8 | 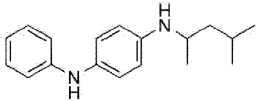 |
| **23** | N-Isopropyl-N'-phényl-p-phénylènediamine **(IPPD)** | 101-72-4 | 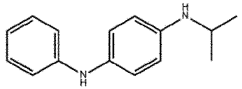 |
| **24** | N,N'-Bis(1,4-diméthylpentyl)-P-phénylènediamine **(77PD)** | 3081-14-9 | 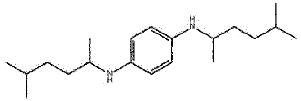 |
| **25** | Bis[4-(2-phényl-2-propyl)phényl]amine **(NAUGARD^{®} 445)** | 10081-67-1 | 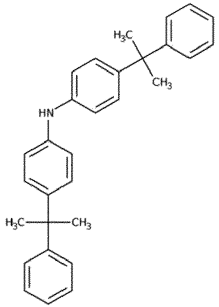 |
| **26** | 4-*N*onyl-n-(4-nonylphenyl)aniline | 24925-59-5 | 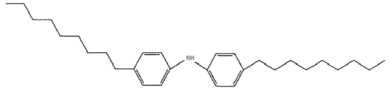 |

Ainsi, les exemples nommés A à I sont selon l'invention et les exemples nommés 1 à 26 sont des exemples comparatifs (anti-oxydants et anti-ozonants standards).

Les résultats de la modélisation QSAR sont illustrés dans le tableau 5 ci-dessous :

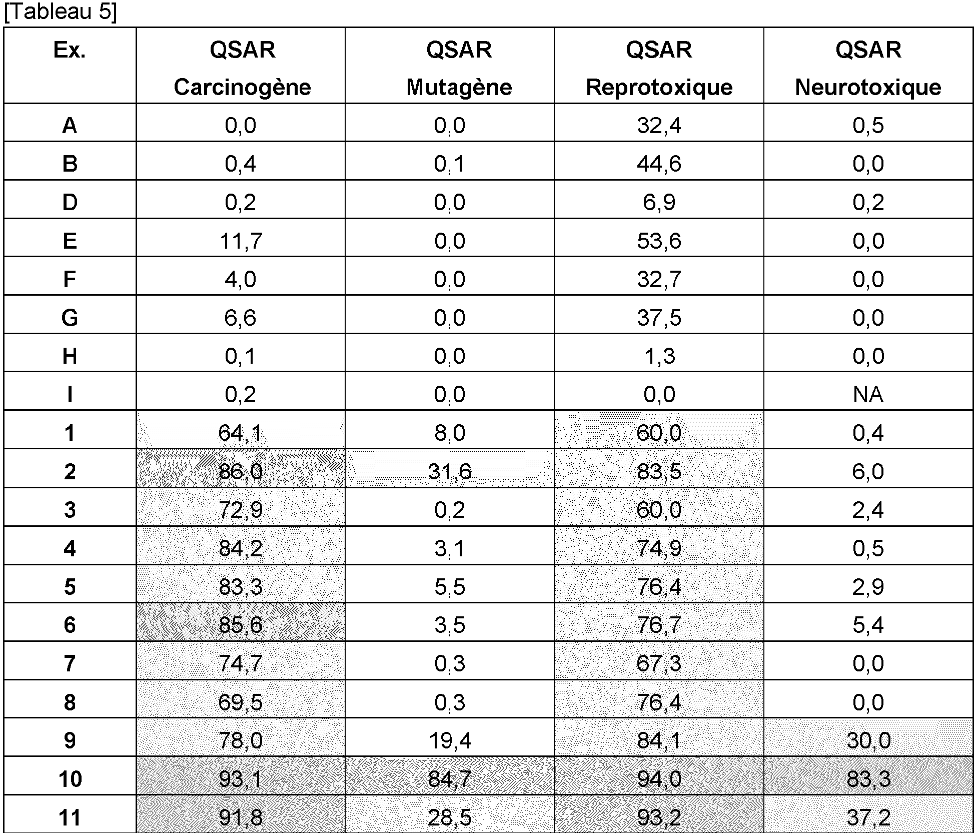

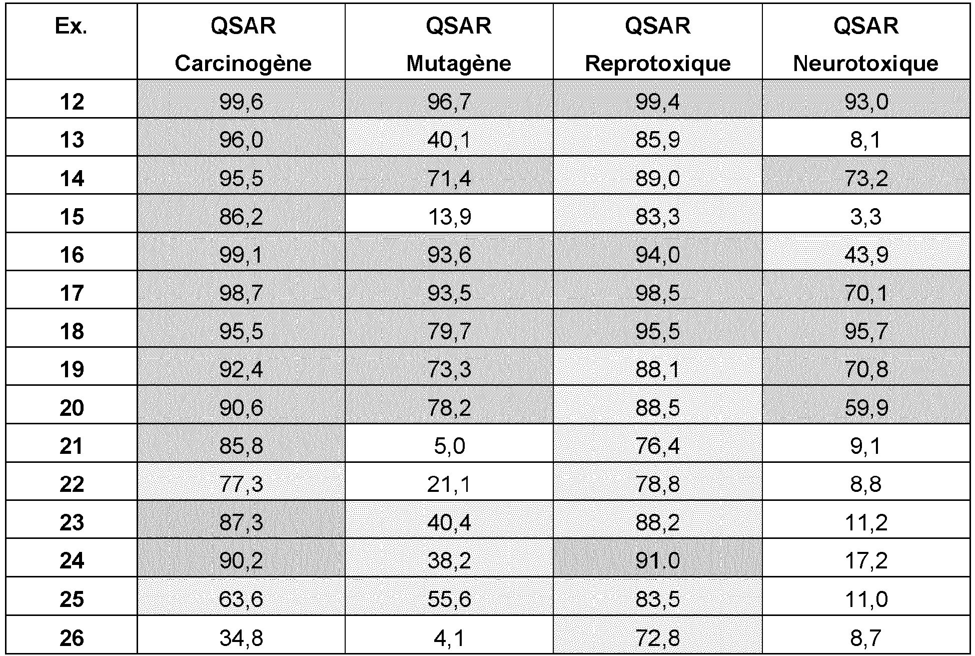

Comme le montre le tableau 5 ci-dessus, les anti-oxydants comprenant un oligomère et/ou polymère comprenant au moins un motif de répétition diphénylamine et éventuellement au moins un motif de répétition phényl α-naphtylamine selon l'invention présentent à la fois une très faible neurotoxicité, reprotoxicité, mutagénicité et un faible caractère carcinogène. Au contraire, les composés composant les anti-oxydants anti-ozonants standards sont en général fortement toxiques, que ce soit en termes de neurotoxicité, reprotoxicité, mutagénicité et/ou du caractère carcinogène.

Cet essai de modélisation QSAR démontre donc que les oligomères et/ou polymères comprenant au moins un motif de répétition diphénylamine et éventuellement au moins un motif de répétition phényl α-naphtylamine selon l'invention permettent de prévenir et/ou réduire la toxicité d'une composition à base de caoutchouc.

### Protocole d'évaluation de la toxicité par des essais in vivo

Dans le but de compléter les essais de modélisation QSAR, la Demanderesse a mené des essais *in vivo* sur des modèles appelés planaires, micro-organismes invertébrés vivant dans l'eau possédant une sphère céphalique et un apparent système neuronal, utilisés dans la littérature pour évaluer la neurotoxicité, le neurodéveloppement et la reprotoxicité de composés préoccupants comme les pesticides et autres composés organophosphorés toxiques (Poirier et al. Médecine/Sciences (Paris) 2019 ; 35 (6-7) :544-8 « La planaire, un modèle animal original pour la toxicologie » ; Collins et al. US-2020209223-A1; D. Hagstrom et al. Archives of toxicology, 2017 91(8), 2837-2847 ; Zhang et al. TOXICOLOGICAL SCIENCES, 2018, 1-19 ; Ireland et al. Chemosphere, 2020, 253, 126718). Les tests sont effectués dans des conditions proches de celles reportées dans la publication mentionnée (Zhang et al. TOXICOLOGICAL SCIENCES, 2018, 1-19).

Les conditions opératoires utilisées sont les suivantes :
- Nombre de concentrations d'essai par produit chimique : 5
- Plages de concentration : 0,22 mg/L - 22 mg/L par paliers semi-logarithmiques
- Organisme étudié : planaires adultes entier
- Durée du test : 12 jours avec une évaluation des points de contrôle à 7 et 12 jours
- Points de contrôle : létalité, adhérence (production de mucus collant par la peau conduisant la planaire à être collée à une paroi plutôt que flottant), vitesse de déplacement, repos (prorata du temps de repos par rapport au temps consacré aux déplacements), phototaxie et « scrunching » (mode de déplacement spécifique nominalement utilisé par le planaire en cas de danger, ici une chaleur excessive).
- Nombre de réplicas : 3

La méthodologie utilisée est décrite ci-après :
- tous les composés sont fournis sous forme de poudres ;
- un volume approprié de DMSO 100 % (Sigma) a été ajouté, comme indiqué sur les tubes, pour obtenir 200 fois le bouillon à 4,4 mg/ml ;
- le criblage a été effectué dans des boîtes en trois exemplaires, en suivant la même procédure pour le montage des boîtes que celle décrite dans Zhang et al., Neurotoxicology and Teratology, 2019.

**[Tableau 6]**

| **Ex.** | **Concentration à partir de laquelle sont observés des troubles du comportement potentiellement liés à des troubles cognitifs du planaire**** | Concentration à partir de laquelle une mortalité significative du planaire est observée selon Zhang et al., Neurotoxicology and Teratology, 2019 |
|---|---|---|
| **C (tableau 4)** | > 22 mg/L | > 22 mg/L |
| **19** | 2,2 - 3,9 mg/L | 6,9 mg/L |
| **22** | 1,5 mg/L | 4,8 mg/L |

| | | |
|---|---|---|
| **Troubles du comportement enregistrés : adhérence (production de mucus collant par la peau conduisant le planaire à être collé à une paroi plutôt que flottant), vitesse de déplacement, repos (prorata du temps de repos par rapport au temps consacré aux déplacements), phototaxie et « scrunching » (mode de déplacement spécifique nominalement utilisé par le planaire en cas de danger, ici une chaleur excessive). | | |

Cet essai montre que les anti-oxydants selon l'invention (mélange des composés A et B) présentent une absence de toxicité in vivo, notamment en comparaison avec les anti-oxydants comparatifs PAN alpha et 6PPD.

### Exemple 2 : Performances antioxydantes des composés oligomères et/ou polymères utilisés selon l'invention

### Formulations testées :

Pour cet essai, deux types de caoutchouc ont été préparés et évalués : le caoutchouc HNBR qui est un caoutchouc butadiène-acrylonitrile hydrogéné et le caoutchouc AEM (VAMAC^{®}) qui est un caoutchouc éthylène acrylique.

Pour chaque caoutchouc, trois formulations ont été réalisées en ne faisant varier que l'anti-oxydant qui est :
- soit un anti-oxydant standard de l'art antérieur, à savoir Bis[4-(2-phényl-2-propyl)phényl]amine, CAS 10081-67-1 (correspondant au produit commercial **Naugard 445^{®},** référence haute performance et haute température sur le marché des additifs pour caoutchoucs),
- soit un mélange de cet anti-oxydant standard avec un anti-oxydant selon l'inventon correspondant à **l'Exemple** C du tableau4.
- soit l'anti-oxydant selon l'invention (**Exemple C)**.

Les caoutchoucs de type HNBR sont formulés selon la composition résumée dans le tableau 7 ci-après (les proportions sont indiquées en pce : part pour cent d'élastomère) :

**[Tableau 7]**

| **Composés** | **Dénomination/ Fournisseur** | **Comp.1** | **F1** | **F2** |
|---|---|---|---|---|
| Caoutchouc | HNBR ZETPROL^{®} 2000 de chez Zeon | 100 | 100 | 100 |
| Noir de carbone | N772 | 60 | 60 | 60 |
| Plastifiant | Huile TOTM (Trioctyle trimellitate) | 10 | 10 | 10 |
| Anti-oxydant (performance marché haute température) | **Naugard 445^{®}** | **4** | **2** | **0** |
| Anti-oxydant | **Exemple C** (invention) | **0** | **2** | **4** |
| Catalyseur de vulcanisation | ZnO actif | 3 | 3 | 3 |
| Accélérateur de vulcanisation | Acide stéarique | 1 | 1 | 1 |
| Agent de réticulation | Soufre | 0,5 | 0,5 | 0,5 |
| Accélérateur de vulcanisation primaire | MBT 100 (Mercaptobenzothiazole) | 0,5 | 0,5 | 0,5 |
| Accélérateur de vulcanisation secondaire | TBzTD (Tetrabenzyl thiuram disulfide) | 3 | 3 | 3 |

Les caoutchoucs de type AEM sont formulés selon la composition résumée dans le tableau 8 ci-après (les proportions sont indiquées en pce : part pour cent d'élastomère) :

**Tableau 8**

| **Composés** | **Dénomination/ Fournisseur** | **Comp.2** | **F3** | **F4** |
|---|---|---|---|---|
| Caoutchouc | VAMAC ULTRA LS | 100 | 100 | 100 |
| Noir de carbone | N660 | 70 | 70 | 70 |
| | Alcanplast PO80 | 15 | 15 | 15 |
| Antioxydant (art antérieur, performance marché haute température) | Naugard 445^{®} | **4** | **2** | **0** |
| Antioxydant (invention) | Exemple C (invention) | **0** | **2** | **4** |
| Accélérateur de vulcanisation | Acide stéarique | 1 | 1 | 1 |
| Agent de dispersion | Armeen 18 D | 1 | 1 | 1 |
| hexamethylene diamine carbamate (accélérateur) | DIAK 1 | 1,5 | 1,5 | 1,5 |
| Amine sur silice (accélérateur) | Vulcofact ACT 55 | 2 | 2 | 2 |

Les six mélanges (i.e. sans le système de vulcanisation) ont été formulés dans un mélangeur interne HAAKE de 300 cm³, puis un système d'accélération a été rajouté sur un mélangeur à cylindres. Un contrôle rhéométrique a été effectué à 180°C pour chaque mélange. Des plaques de caoutchouc type HNBR 150*150*2 mm ont été moulées par compression après 98 min à 180 °C. Des plaques de caoutchouc type EAM de 150*150*2 mm ont été moulées après 98 min à 180 °C puis post-vulcanisées en étuve à 150 °C pendant 4 h.

### Résultats

Les propriétés mécaniques de ces six formulations ont été évaluées à l'état initial (tableau 9) et après un vieillissement de 10 jours à 130°C (tableau 10) et les résultats sont les suivants :

**[Tableau 9]**

| Etat initial | | | | | | |
|---|---|---|---|---|---|---|
| **Propriétés** | **Comp.1** | **F1** | **F2** | **Comp.2** | **F3** | **F4** |
| **Masse volumique (g/cm³) (NF ISO 2781)** | 1,16 | 1,16 | 1,16 | 1,26 | 1,26 | 1,26 |
| **Dureté Shore A (NF ISO 7619-1)** | 54 | 56 | 58 | 71 | 70 | 70 |
| **Contrainte max (MPa)** | 10,1 | 11,0 | 10,5 | 17,4 | 16,2 | 17,0 |

| **Propriétés** | **Comp.1** | **F1** | **F2** | **Comp.2** | **F3** | **F4** |
|---|---|---|---|---|---|---|
| **(NF ISO 37)** | | | | | | |
| **Allongement à contrainte max (%) (NF ISO 37)** | 1130 | 1070 | 1050 | 284 | 284 | 297 |
| **C100% (MPa) (NF ISO 6502)** | 1,32 | 1,35 | 1,40 | 5,6 | 5,6 | 4,7 |
| **C300% (MPa) (NF ISO 6502)** | 2,38 | 2,56 | 2,81 | / | / | / |
| **C300/C100** | 1,80 | 1,90 | 2,00 | / | / | / |

**[Tableau 10]**

| Après un vieillissement de 10 jours à 130°C | | | | | | |
|---|---|---|---|---|---|---|
| **Propriétés** | **Comp.1** | **F1** | **F2** | **Comp.2** | **F3** | **F4** |
| **Masse volumique (g/cm³) (NF ISO 2781)** | 1,17 | 1,17 | 1,17 | 1,278 | 1,277 | 1,275 |
| **Dureté Shore A (NF ISO 7619-1)** | 62 | 63 | 65 | 73 | 72 | 74 |
| **Contrainte max (MPa) (NF ISO 37)** | 9,8 | 9,9 | 9,7 | 16,9 | 15,8 | 16,6 |
| **Allongement à contrainte max (%) (NF ISO 37)** | 759 | 782 | 782 | 277 | 261 | 283 |
| **C100% (MPa) (NF ISO 6502)** | 2,13 | 2,09 | 2,00 | 5,4 | 5,9 | 5,0 |
| **C300% (MPa) (NF ISO 6502)** | 5,83 | 5,73 | 5,51 | / | / | / |
| **C300/C100** | 2,74 | 2,74 | 2,76 | / | / | / |

Ainsi, cet essai montre que les niveaux de performances mécaniques et de vieillissement pour des compositions de caoutchouc obtenues avec l'additif anti-oxydant selon l'invention sont du même niveau, voire à un niveau supérieur par rapport aux mêmes compositions réalisées à partir d'un anti-oxydant comparatif reconnu sur le marché (référence marché haute performance et haute température) et ce, pour deux compositions de caoutchouc différentes (i.e. : **HNBR** et **AEM**).

Bien entendu, diverses autres modifications peuvent être apportées à l'invention dans le cadre des revendications annexées.

## Revendications

1. Utilisation d'au moins un antioxydant dans une composition de caoutchouc, ledit au moins antioxydant comprenant au moins un oligomère et/ou polymère comprenant au moins un motif de répétition diphénylamine de formule générale (I) 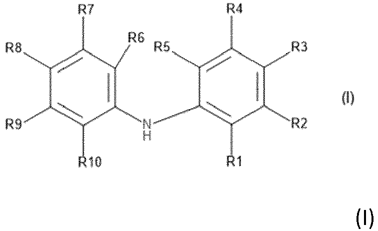
dans laquelle chacun parmi **R1** à **R10** est choisi indépendamment parmi
un atome d'hydrogène,
un groupe alkyle qui est un groupe hydrocarboné saturé, linéaire ou ramifié comprenant de 1 à 24 atomes de carbone et
un groupe aralkyle qui est un groupe alkyle tel que décrit ci-dessus dont au moins un des atomes de carbone est substitué par un groupe aryle monocyclique ou polycyclique aromatique hydrocarboné comprenant 5 à 14 atomes de carbone,
pour réduire et/ou prévenir la toxicité de ladite composition de caoutchouc dans laquelle il est incorporé au regard de celle des anti-oxydants appartenant à la famille des monomères de diphénylamines (DPA) ou p-phénylènediamines (PPD).

2. Utilisation selon la revendication 1, dans laquelle la toxicité comprend une ou plusieurs des toxicités suivantes : la neurotoxicité, la reprotoxicité, la mutagénicité, la toxicité aiguë, le caractère carcinogène, la toxicité sur la synthèse, la dégradation et le mode d'action des hormones, et l'écotoxicité.

3. Utilisation selon la revendication 1 ou 2, dans laquelle ledit oligomère et/ou polymère comprend également au moins un motif de répétition phényl α-naphtylamine de formule générale (II) : 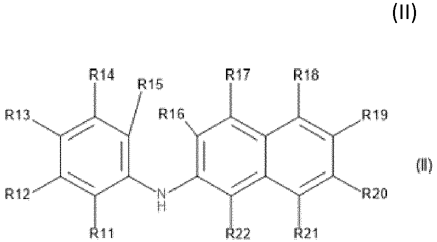 dans laquelle chacun parmi **R11** à **R22** est choisi indépendamment parmi un atome d'hydrogène et un groupe alkyle qui est un groupe hydrocarboné saturé, linéaire ou ramifié comprenant de 1 à 24 atomes de carbone.

4. Utilisation selon l'une quelconque des revendications précédentes, dans laquelle la au moins une diphénylamine de formule (I) est une diphénylamine alkylée dans laquelle au moins un, de préférence deux, parmi **R1** à **R10** est un groupe alkyle ou aralkyle, tel qu'un groupe tert-butyle ou un groupe tert-octyle ou encore un groupe n-nonyle.

5. Utilisation selon l'une quelconque des revendications précédentes 1 à 4, dans laquelle la au moins une diphénylamine de formule (I) est une diphénylamine alkylée dans laquelle au moins un, de préférence deux, parmi **R1** à **R5** est un groupe alkyle ou aralkyle, tel qu'un groupe ter-butyle ou un groupe tert-octyle et au moins un, de préférence deux, parmi **R6** à R10 est un groupe alkyle ou aralkyle, tel qu'un groupe tert-butyle ou un groupe tert-octyle.

6. Utilisation selon l'une quelconque des revendications précédentes, dans laquelle la diphénylamine de formule (I) est choisie dans le groupe constitué par la N,N-diphénylamine, la N,N-di-(p-tert-butylphényl)amine, la N,N-di-(p-tert-octylphényl)amine, la N-(p-tert-butylphényl)-N-phénylamine, la N-(p-tert-octylphényl)-N-phénylamine, la N-(p-tert-butylphényl)-N-(p-tert-octylphényl)amine, les diphénylamines tert-butylé et/ou tert-octylé, les diphénylamine nonylées et un quelconque mélange de celles-ci.

7. Utilisation selon l'une quelconque des revendications précédentes 3 à 6, dans laquelle ledit oligomère et/ou polymère comprenant au moins un motif de répétition diphénylamine est choisi parmi un ou plusieurs des composés suivants : un dimère de di-t-octyl-diphénylamine, un trimère de di-t-octyl-diphénylamine, un trimère comprenant deux motifs di-t-octyl-diphénylamine et un motif N-(4-tert-octylphenyl)-1-naphthylamine, et l'oligomère du mélange N,N-diphénylamine, la N,N-di-(p-tert-butylphényl)amine, la N,N-di-(p-tert-octylphényl)amine, la N-(p-tert-butylphényl)-N-phénylamine, la N-(p-tert-octylphényl)-N-phénylamine, la N-(p-tert-butylphényl)-N-(p-tert-octylphényl)amine.

8. Utilisation selon l'une quelconque des revendications 3 à 7, dans laquelle la phényl α-naphtylamine est la N-(4-tert-octylphenyl)-1-naphthylamine.

9. Utilisation selon l'une quelconque des revendications précédentes 3 à 9, dans lequel le polymère et/ou oligomère ne comprend dans sa structure que des motifs de répétition diphénylamine et éventuellement des motifs de répétition phényl α-naphtylamine.

10. Utilisation selon l'une des revendications précédentes 3 à 9, dans laquelle, l'oligomère et/ou le polymère comprenant au moins un motif de répétition diphénylamine de formule (I) et éventuellement au moins un motif de répétition phényl α-naphtylamine de formule (II) présente une valeur QSAR pour la mesure de chacune des toxicité suivantes : la neurotoxicité (QSAR neurotoxique), la reprotoxicité (QSAR reprotoxique), la mutagénicité (QSAR mutagène) et le caractère carcinogène (QSAR carcinogène), correspondant à une valeur seuil statistique (%) soustraite d'un delta d'au moins 30%, ladite valeur seuil statistique étant déterminée, pour chacune desdites toxicité, par la modélisation QSAR selon la méthode décrite dans la partie expérimentale.

## Patentansprüche

1. Verwendung mindestens eines Antioxidans in einer Kautschukzusammensetzung, wobei das mindestens eine Antioxidans mindestens ein Oligomer und/oder Polymer umfasst, das mindestens eine Diphenylamin-Repetiereinheit der allgemeinen Formel (I) 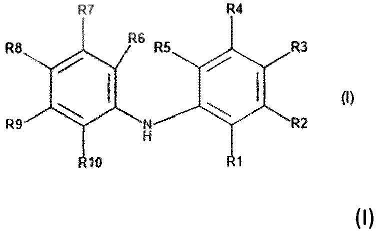
umfasst, wobei jeder von R1 bis R10 unabhängig ausgewählt ist aus
einem Wasserstoffatom,
einer Alkylgruppe, bei der es sich um eine gesättigte, lineare oder verzweigte Kohlenwasserstoffgruppe handelt, die 1 bis 24 Kohlenstoffatome umfasst, und
einer Aralkylgruppe, bei der es sich um eine vorstehend beschriebene Alkylgruppe handelt, bei der mindestens eines der Kohlenstoffatome durch eine aromatische monocyclische oder polycyclische Kohlenwasserstoffarylgruppe substituiert ist, die 5 bis 14 Kohlenstoffatome umfasst,
zur Verringerung und/oder Verhinderung der Toxizität der Kautschukzusammensetzung, in die es eingearbeitet ist, im Vergleich zu derjenigen von Antioxidantien, die zur Familie der Diphenylamin- (DPA-) oder p-Phenylendiamin- (PPD-)Monomere zählen.

2. Verwendung nach Anspruch 1, wobei die Toxizität eine oder mehrere der folgenden Toxizitäten umfasst: Neurotoxizität, Reproduktionstoxizität, Mutagenität, akute Toxizität, karzinogene Beschaffenheit, Synthesetoxizität, Zerfall und Wirkmechanismus von Hormonen und Ökotoxizität.

3. Verwendung nach Anspruch 1 oder 2, wobei das Oligomer und/oder Polymer auch mindestens eine Phenyl-α-naphthylamin-Repetiereinheit der allgemeinen Formel (II): 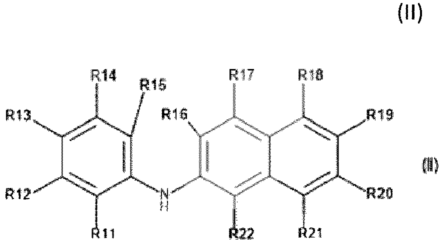 umfasst, wobei jeder von R11 bis R22 aus einem Wasserstoffatom und einer Alkylgruppe unabhängig ausgewählt ist, bei der es sich um eine lineare oder verzweigte gesättigte Kohlenwasserstoffgruppe handelt, die 1 bis 24 Kohlenstoffatome umfasst.

4. Verwendung nach einem der vorhergehenden Ansprüche, wobei das mindestens eine Diphenylamin der Formel (I) ein alkyliertes Diphenylamin ist, wobei mindestens ein, vorzugsweise zwei von R1 bis R10 eine Alkyl- oder Aralkylgruppe, wie eine tert-Butylgruppe oder eine tert-Octylgruppe oder sogar eine n-Nonylgruppe, ist bzw. sind.

5. Verwendung nach einem der vorhergehenden Ansprüche 1 bis 4, wobei das mindestens eine Diphenylamin der Formel (I) ein alkyliertes Diphenylamin ist, wobei mindestens ein, vorzugsweise zwei von R1 bis R5 eine Alkyl- oder Aralkylgruppe, wie eine tert-Butylgruppe oder eine tert-Octylgruppe, ist bzw. sind und mindestens eine, vorzugsweise zwei von R6 bis R10 eine Alkyl- oder Aralkylgruppe, wie eine tert-Butylgruppe oder eine tert-Octylgruppe, ist bzw. sind.

6. Verwendung nach einem der vorhergehenden Ansprüche, wobei das Diphenylamin der Formel (I) ausgewählt ist aus der Gruppe bestehend aus N,N-Diphenylamin, N,N-Di-(p-tert-butylphenyl)amin, N,N-Di-(p-tert-octylphenyl)amin, N-(p-tert-Butylphenyl)-N-phenylamin, N-(p-tert-Octylphenyl)-N-phenylamin, N-(p-tert-Butylphenyl)-N-(p-tert-octylphenyl)amin, tert-butylierten und/oder tertoctylierten Diphenylaminen, nonylierten Diphenylaminen und einer beliebigen Mischung davon.

7. Verwendung nach einem der vorhergehenden Ansprüche 3 bis 6, wobei das mindestens eine Diphenylamin-Repetiereinheit umfassende Oligomer und/oder Polymer aus einer oder mehreren der folgenden Verbindungen ausgewählt ist: einem Dimer von Di-t-octyldiphenylamin, einem Trimer von Di-t-octyldiphenylamin, einem Trimer, das zwei Di-t-octyldiphenylamin-Reste und einen N-(4-tert-Octylphenyl)-1-naphthylamin-Rest umfasst, und dem Oligomer einer Mischung von N,N-Diphenylamin, N,N-Di-(p-tert-butylphenyl)amin, N,N-Di-(p-tert-octylphenyl)amin, N-(p-tert-Butylphenyl)-N-phenylamin, N-(p-tert-Octylphenyl)-N-phenylamin, N-(p-tert-Butylphenyl)-N-(p-tert-Octylphenyl)amin.

8. Verwendung nach einem der Ansprüche 3 bis 7, wobei es sich beim Phenyl-α-naphthylamin um N-(4-tert-Octylphenyl)-1-naphthylamin handelt.

9. Verwendung nach einem der vorhergehenden Ansprüche 3 bis 9, wobei das Polymer und/oder Oligomer in seiner Struktur nur Diphenylamin-Repetiereinheiten und gegebenenfalls Phenyl-α-naphthylamin-Repetiereinheiten umfasst.

10. Verwendung nach einem der vorhergehenden Ansprüche 3 bis 9, wobei das Oligomer und/oder das Polymer, das mindestens eine Diphenylamin-Repetiereinheit der Formel (I) und gegebenenfalls mindestens eine Phenyl-α-naphthylamin-Repetiereinheit der Formel (II) umfasst, einen QSAR-Wert zur Messung einer jeden der folgenden Toxizitäten aufweist: Neurotoxizität (neurotoxische QSAR), Reproduktionstoxizität (reproduktionstoxische QSAR), Mutagenität (mutagene QSAR) und karzinogene Beschaffenheit (karzinogene QSAR), der einem statistischen Schwellenwert (%) entspricht, von dem eine Differenz von mindestens 30 % subtrahiert wird, wobei der statistische Schwellenwert für jede der Toxizitäten durch eine QSAR-Modellierung gemäß dem im experimentellen Teil beschriebenen Verfahren bestimmt wird.

## Claims

1. Use of at least one antioxidant in a rubber composition, said at least one antioxidant comprising at least one oligomer and/or polymer comprising at least one diphenylamine repeat unit of the general formula (I) 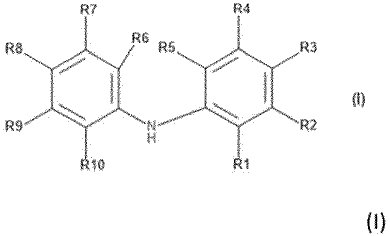
wherein each of R1 to R10 is independently selected from
a hydrogen atom,
an alkyl group which is a saturated, linear or branched hydrocarbon group comprising from 1 to 24 carbon atoms and
an aralkyl group which is an alkyl group as described above of which at least one of the carbon atoms is substituted by a hydrocarbon aromatic monocyclic or polycyclic aryl group comprising 5 to 14 carbon atoms,
for reducing and/or preventing the toxicity of said rubber composition in which it is incorporated with respect to that of antioxidants belonging to the family of diphenylamine (DPA) or p-phenylenediamine (PPD) monomers.

2. The use according to claim 1, wherein the toxicity comprises one or more of the following toxicities: neurotoxicity, reprotoxicity, mutagenicity, acute toxicity, carcinogenicity, toxicity on the synthesis, degradation and mode of action of hormones, and ecotoxicity.

3. The use according to claim 1 or 2, wherein said oligomer and/or polymer also comprises at least one phenyl α-naphthylamine repeat unit of the general formula (II): 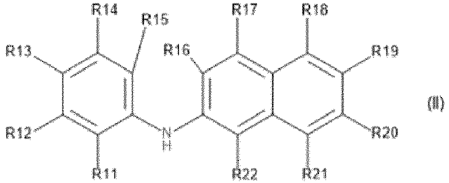 wherein each of **R11** to **R22** is independently selected from a hydrogen atom and an alkyl group which is a saturated, linear or branched hydrocarbon group comprising from 1 to 24 carbon atoms.

4. The use according to any one of the preceding claims, wherein the at least one diphenylamine of the formula (I) is an alkylated diphenylamine wherein at least one, preferably two, of **R1** to **R10** is an alkyl or aralkyl group, such as a tert-butyl group or a tert-octyl group or a n-nonyl group.

5. The use according to any one of the preceding claims 1 to 4, wherein the at least one diphenylamine of the formula (I) is an alkylated diphenylamine wherein at least one, preferably two, of **R1** to **R5** is an alkyl or aralkyl group, such as a tert-butyl group or a tert-octyl group, and at least one, preferably two, of **R6** to **R10** is an alkyl or aralkyl group, such as a tert-butyl group or a tert-octyl group.

6. The use according to any one of the preceding claims, wherein the diphenylamine of the formula (I) is selected from the group consisting of N,N-diphenylamine, N,N-di-(p-tert-butylphenyl)amine, N,N-di-(p-tert-octylphenyl)amine, N-(p-tert-butylphenyl)-N-phenylamine, N-(p-tert-octylphenyl)-N-phenylamine, N-(p-tert-butylphenyl)-N-(p-tert-octylphenyl)amine, tert-butylated and/or tert-octylated diphenylamines, nonylated diphenylamines and any mixture thereof.

7. The use according to any one of the preceding claims 3 to 6, wherein said oligomer and/or polymer comprising at least one diphenylamine repeat unit is selected from one or more of the following compounds: di-t-octyl-diphenylamine dimer, di-t-octyl-diphenylamine trimer, trimer comprising two di-t-octyl-diphenylamine units and one N-(4-tert-octylphenyl)-1-naphthylamine unit, and oligomer of the mixture N,N-diphenylamine, N,N-di-(p-tert-butylphenyl)amine, N,N-di-(p-tert-octylphenyl)amine, N-(p-tert-butylphenyl)-N-phenylamine, N-(p-tert-octylphenyl)-N-phenylamine, N-(p-tert-butylphenyl)-N-(p-tert-octylphenyl)amine.

8. The use according to any one of the claims 3 to 7, wherein the phenyl α-naphthylamine is the N-(4-tert-octylphenyl)-1-naphthylamine.

9. The use according to any one of the preceding claims 3 to 9, wherein the polymer and/or oligomer comprises in its structure only diphenylamine repeat units and optionally phenyl α-naphthylamine repeat units.

10. The use according to any one of the preceding claims 3 to 9, wherein the oligomer and/or polymer comprising at least one diphenylamine repeat unit of the formula (I) and optionally at least one phenyl α-naphthylamine repeat unit of the formula (II) has a QSAR value for the measurement of each of the following toxicities: neurotoxicity (neurotoxic QSAR), reprotoxicity (reprotoxic QSAR), mutagenicity (mutagenic QSAR), and carcinogenicity (carcinogenic QSAR), corresponding to a statistical threshold value (%) subtracted from a delta of at least 30%, said statistical threshold value being determined, for each of said toxicities, by the QSAR Modelling according to the method described in the experimental part.
